# EUROPEAN PATENT APPLICATION

(11) **EP 2 278 830 A1**
(43) Date of publication of application: **26.01.2011**
(21) Application number: 09734269.5
(22) Date of filing: 20.04.2009
(51) Int. Cl.: H04W 4/06

(54) **COMMUNICATION DEVICE AND COMMUNICATION METHOD**

(30) Priority: 22.04.2008 JP 2008111640
(71) Applicant: Sharp Kabushiki Kaisha, Osaka-shi, Osaka 545-8522 (JP)
(72) Inventor: SUGAWARA, Yasuo, Osaka-shi, Osaka 545-8522 (JP); YAMADA, Shohei, Osaka-shi, Osaka 545-8522 (JP)
(74) Representative: Müller - Hoffmann & Partner
(86) International application number: PCT/JP2009/057831
(87) International publication number: WO 2009/131087

(57) **Abstract**

Efficient use of an identification information group (MAC ID) region which is assigned to a mobile station apparatus by a base station apparatus, and reduction in an uplink resource for making a request from the mobile station apparatus to the base station apparatus to start transmission of an MBMS service, are realized. In a mobile communication system which provides a Multimedia Broadcast Multicast Service (MBMS), a mobile station apparatus communicates with a base station apparatus. A control unit 210 is included which performs mapping between an MBMS service ID for identifying the MBMS service provided in this mobile communication system, and an MBMS short transmission ID for identifying the MBMS service transmitted within a cell, and further maps the MBMS short transmission ID to an MBMS group ID (MBMS-RNTI) for identifying a group of mobile stations to which multicast is performed. This MBMS control unit 210 manages a correspondence relationship among the MBMS service ID, the MBMS short transmission ID and the MBMS group ID (MBMS-RNTI), based on information received from the base station apparatus included in an SCPTM cell.

## Description

### Technical Field

The present invention relates to a communication technique, and more particularly, to a mobile station apparatus, a base station apparatus, a communication system, a communication method, and a program.

### Background Art

### <Regarding EUTRA/EUTRAN>

For a mobile telephone system network which is commonly applicable to fixed communication and mobile communication, in the 3GPP (3rd Generation Partnership Project), a W-CDMA (Wideband Code Division Multiple Access) scheme has been standardized as a 3rd Generation cellular mobile communication scheme, and the services have been sequentially started. Moreover, HSDPA (High Speed Downlink Packet Access) with further increased communication speed has also been standardized, and the services are being started. Furthermore, in the 3GPP, Evolved Universal Terrestrial Radio Access (hereinafter referred to as "EUTRA") has been studied.

As a downlink of the EUTRA, an OFDM (Orthogonal Frequency Division Multiplexing) scheme has been proposed. As an EUTRA technique, a technique such as an adaptive modulation, demodulation and error correction scheme (AMCS: Adaptive Modulation and Coding Scheme) based on adaptive radio link control (Link Adaptation) for channel coding and the like has been applied to the OFDM scheme. The AMCS scheme is a scheme for switching radio transmission parameters, such as an error correction scheme, an error correction coding rate, a data modulation multi-valued number (MCS: Modulation and Coding Scheme), a code Spreading Factor (SF) of time/frequency axes, and a multi-code multiplexing number, depending on a propagation path status at each mobile station apparatus, in order to efficiently perform high-speed packet data transmission. For example, for data modulation, a maximum throughput of a communication system can be increased by switching the modulation from QPSK (Quadrature Phase Shift Keying) modulation to more efficient multilevel modulation, such as 16QAM (Quadrature Amplitude Modulation) modulation or 64QAM modulation, as the propagation path status is improved. On the other hand, as an uplink of the EUTRA, a DFT-S-OFDM (Discrete Fourier transform Spread OFDM) scheme has been proposed (see the following Non-Patent Document 1).

Figure 20 is a diagram showing a physical channel configuration example in the EUTRA (see Non-Patent Document 1). The downlink of the EUTRA includes a Physical Broadcast Channel (PBCH), a Physical Downlink Control Channel (PDCCH), a Physical Downlink Shared Channel (PDSCH), a Physical Multicast Channel (PMCH), a Physical Control Format Indicator Channel (PCFICH), and a Physical Hybrid ARQ Indicator Channel (PHICH).

Moreover, the uplink of the EUTRA includes a Physical Uplink Shared Channel (PUSCH), a Physical Random Access Channel (PRACH), and a Physical Uplink Control Channel (PUCCH).

### <Regarding MBMS>

In addition, in an argument related to the EUTRA, a Multimedia Broadcast Multicast Service (MBMS, hereinafter referred to as "MBMS service") is studied. As MBMS service transmission methods, there are Single-Cell Point-to-Multipoint (SCPTM) Transmission and Multimedia Broadcast multicast service Single Frequency Network (MBSFN) Transmission.

Here, the MBSFN Transmission is a simultaneous transmission technique which is realized by simultaneously transmitting identifiable waveforms (signals) from a plurality of cells. If the MBSFN Transmission is performed from a plurality of base station apparatuses included in an MBSFN Area, the mobile station apparatus can regard the MBSFN Transmission as one transmission. Moreover, the MBSFN Area includes a group of cells in an MBSFN Synchronization Area, and the MBSFN Transmission is performed. The MBSFN Synchronization Area is a network area in which all the base station apparatuses are synchronized and perform the MBSFN Transmission. In other words, the MBSFN Area belongs to the MBSFN Synchronization Area, and in the MBSFN Area, the MBMS service is provided by using the MBSFN Transmission.

On the other hand, the SCPTM Transmission is a method of transmitting the MBMS service from one base station apparatus. In this description, for convenience of explanation, a range in which the base station apparatus provides the MBMS service via the SCPTM transmission is referred to as "SCPTM cell".
Non-Patent Document 1: 3GPP TS (Technical Specification) 36.300 V8.3.0 (2007-12), Evolved Universal Terrestrial Radio Access (EUTRA) and Evolved Universal Terrestrial Radio Access Network (EUTRAN); Overall description; Stage2 (Release 8).

### Disclosure of the Invention

### Problems to be Solved by the Invention

### <Regarding the method to provide MBMS Service in SCPTM Cell>

Incidentally, if the MBMS service is provided in the SCPTM cell, in a conventional method, when a downlink resource including the MBMS service is scheduled, it is not clear how the mobile station apparatus which should receive the MBMS service is designated, and thus the MBMS service cannot be received. Moreover, for scheduling of unicast data, a 16-bit Cell - Radio Network Temporary Identity (C-RNTI), which is an identifier of the mobile station apparatus, is used.

Moreover, the base station apparatus notifies the mobile station apparatus of an MBMS service ID, which is information for identifying the MBMS service that is being provided by an operator or a mobile communication system. Here, the MBMS service ID includes on the order of 24 bits (3 octets) to 40 bits (5 octets), and is an identifier which is assigned to the MBMS service that can be provided by the operator, and is an ID which can be identified for each operator. However, there is a problem in that this MBMS service ID is 16 bits or more, and thus cannot be mixed and used with a method to designate a mobile station using 16 bits when the scheduling of the unicast data is performed to the mobile station apparatus.

An object of the present invention is to realize efficient use of an identification information group (MAC ID (also referred to as "RNTI" or "User Equipment Identity (UEID)")) region which is assigned to the mobile station apparatus by the base station apparatus, and reduction in an uplink resource for making a request from the mobile station apparatus to the base station apparatus to start the transmission of the MBMS service.

### Means for Solving the Problems

In a communication technique according to the present invention, the base station apparatus included in the SCPTM cell efficiently uses the User Equipment Identity (UEID) region which is assigned to the mobile station apparatus by the base station apparatus, and moreover, reduces the uplink resource for making the request from the mobile station apparatus to the base station apparatus to start the transmission of the MBMS service, based on a correspondence relationship among the MBMS service ID, an MBMS short transmission ID and an MBMS group ID (MBMS-RNTI: MBMS - Radio Network Temporary Identity).

According to an aspect of the present invention, there is provided, in a mobile communication system which provides a Multimedia Broadcast Multicast Service (MBMS), a mobile station apparatus which communicates with a base station apparatus, including a first control unit which maps an MBMS short transmission ID for identifying the MBMS service transmitted within a cell, to an MBMS group ID (MBMS-RNTI) for identifying a group of mobile stations to which multicast is performed.

Moreover, there is provided a base station apparatus which provides an MBMS service to a mobile station apparatus, including a second control unit which, if an MBMS service start request message including an MBMS short transmission ID is received from the mobile station apparatus, calculates an MBMS group ID (MBMS-RNTI) corresponding to the MBMS short transmission ID, and starts transmission of the MBMS service.

Furthermore, there is provided a mobile communication system which includes a base station apparatus and a mobile station apparatus, and provides a Multimedia Broadcast Multicast Service (MBMS), wherein the mobile station apparatus includes a first control unit which performs mapping between an MBMS service ID for identifying the MBMS service provided in the mobile communication system, and an MBMS short transmission ID for identifying the MBMS service transmitted within an SCPTM cell, and further maps the MBMS short transmission ID to an MBMS group ID (MBMS-RNTI) for identifying a group of mobile stations to which multicast is performed, and the base station apparatus includes a second control unit which, if the MBMS service start request message including the MBMS short transmission ID is received from the mobile station apparatus, calculates the MBMS group ID (MBMS-RNTI) corresponding to the MBMS short transmission ID, and starts transmission of the MBMS service.

According to another aspect of the present invention, there is provided, in a mobile communication system which provides a Multimedia Broadcast Multicast Service (MBMS), a communication method in a mobile station apparatus which communicates with a base station apparatus, including the steps of performing mapping between an MBMS service ID for identifying the MBMS service provided in the mobile communication system, and an MBMS short transmission ID for identifying the MBMS service transmitted within a cell; and further mapping the MBMS short transmission ID to an MBMS group ID (MBMS-RNTI) for identifying a group of mobile stations to which multicast is performed. A program for causing a computer to execute this method may be provided. Moreover, a recording medium having recorded therein the program may be provided. The program may be obtained via a transmission medium.

### Advantage of the Invention

According to the present invention, there are advantages that the efficient use of the identification information group (MAC ID (RNTI, User Equipment Identity (UEID))) region which is assigned to the mobile station apparatus by the base station apparatus, and moreover, the reduction in the uplink resource for making the request from the mobile station apparatus to the base station apparatus to start the transmission of the MBMS service, can be realized.

### Brief Description of the Drawings

Figure 1 is a functional block diagram showing a configuration example of a base station apparatus used for a communication technique according to an embodiment of the present invention.
Figure 2 is a functional block diagram showing a configuration example of a mobile station apparatus in the present embodiment.
Figure 3 is a diagram showing a channel configuration example in EUTRA, and is a diagram showing a downlink channel mapping relationship.
Figure 4 is a diagram showing a channel configuration example in the EUTRA, and is a diagram showing an uplink channel mapping relationship.
Figure 5 is a diagram showing a frame configuration in the EUTRA, and is a diagram showing an uplink frame configuration example.
Figure 6 is a diagram showing a frame configuration in the EUTRA, and is a diagram showing a downlink frame configuration.
Figure 7 is a diagram explicitly showing a mapping relationship at a time when mapping information between MBMS short transmission ID and MBMS service ID are transmitted in MBMS-related information, and further showing whether or not an MBMS service thereof is being transmitted.
Figure 8 is a diagram implicitly showing the mapping relationship at the time when mapping information between the MBMS short transmission ID and the MBMS service ID are transmitted in the MBMS-related information, and further showing whether or not the MBMS service thereof is being transmitted.
Figure 9 is a conceptual diagram showing a space of an identification information group (MAC ID) which is mapped to a Physical Downlink Control Channel (PDCCH), when a third mapping method is used to provide the MBMS service in an SCPTM cell.
Figure 10 is a conceptual diagram showing the space of the identification information group (MAC ID) which is mapped to the Physical Downlink Control Channel (PDCCH), when second and third mapping methods are used to provide the MBMS service in the SCPTM cell.
Figure 11 is a diagram showing a correspondence relationship among the MBMS short transmission ID, an MBMS group ID (MBMS-RNTI) and the MBMS service ID, when a first mapping method is used to provide the MBMS service in the SCPTM cell.
Figure 12 is a diagram implicitly showing, when the second mapping method is used to provide the MBMS service in the SCPTM cell, a mapping relationship at a time when the MBMS short transmission ID and the MBMS group ID (MBMS-RNTI) are transmitted in the MBMS-related information.
Figure 13(a) is a diagram showing the correspondence relationship among the MBMS short transmission ID, the MBMS group ID (MBMS-RNTI) and the MBMS service ID, when the third mapping method is used to provide the MBMS service in the SCPTM cell, and Figure 13(b) is a diagram showing a case where FEDC (in hexadecimal notation) has been set as a base ID.
Figure 14 is a diagram showing that, when the third mapping method is used to provide the MBMS service in the SCPTM cell, the base ID is transmitted along with implicitly-indicated mapping information between the MBMS short transmission ID and a flexible ID, in the MBMS-related information.
Figure 15 is a flowchart diagram showing a transmission procedure in the base station apparatus (a radio resource control unit 109 (including an MBMS control unit 110)) included in the SCPTM cell.
Figure 16 is a diagram showing the correspondence relationship among the MBMS short transmission ID, the MBMS group ID (MBMS-RNTI) and the MBMS service ID, if the second mapping method is used to provide the MBMS service in the SCPTM cell.
Figure 17 is a flowchart diagram showing a processing procedure in the mobile station apparatus (a radio resource control unit 209 (including an MBMS control unit 210)) when the first mapping method is used to receive the MBMS service in the SCPTM cell.
Figure 18 is a flowchart diagram showing a processing procedure in the mobile station apparatus (the radio resource control unit 209 (including the MBMS control unit 210)) when the second mapping method is used to receive the MBMS service in the SCPTM cell.
Figure 19 is a flowchart diagram showing a processing procedure in the mobile station apparatus (the radio resource control unit 209 (including the MBMS control unit 210)) when the third mapping method is used to receive the MBMS service in the SCPTM cell.
Figure 20 is a diagram showing a physical channel configuration example in the EUTRA.
Figure 21 (a) is a diagram showing the correspondence relationship among the MBMS short transmission ID, the MBMS group ID (MBMS-RNTI) and the MBMS service ID, when a fourth mapping method is used to provide the MBMS service in the SCPTM cell, and Figure 21 (b) is a diagram showing a case where FEDB (in hexadecimal notation) has been set as the base ID.
Figure 22 is a diagram showing the base ID obtained by using the fourth mapping method.
Figure 23 is a flowchart diagram showing a processing procedure in the mobile station apparatus (the radio resource control unit 209 (including the MBMS control unit 210)) when the fourth mapping method is used to receive the MBMS service in the SCPTM cell.

### Description of Symbols

- 100: base station apparatus
- 101: data control unit
- 102: OFDM modulation unit
- 103: radio unit
- 104: scheduling unit
- 105: channel estimation unit
- 106: DFT-S-OFDM demodulation unit
- 107: data extraction unit
- 108: higher layer
- 109: radio resource control unit
- 110: MBMS control unit (second control unit)
- 200: mobile station apparatus
- 201: data control unit
- 202: DFT-S-OFDM modulation unit
- 203: radio unit
- 204: scheduling unit
- 205: channel estimation unit
- 206: OFDM demodulation unit
- 207: data extraction unit
- 208: higher layer
- 209: radio resource control unit
- 210: MBMS control unit (first control unit)

### Best Mode for Carrying Out the Invention

Hereinafter, a communication technique according to an embodiment of the present invention will be described with reference to the drawings. A communication system according to the present embodiment is configured to include a base station apparatus 100 and a mobile station apparatus 200.

### <Base Station Apparatus>

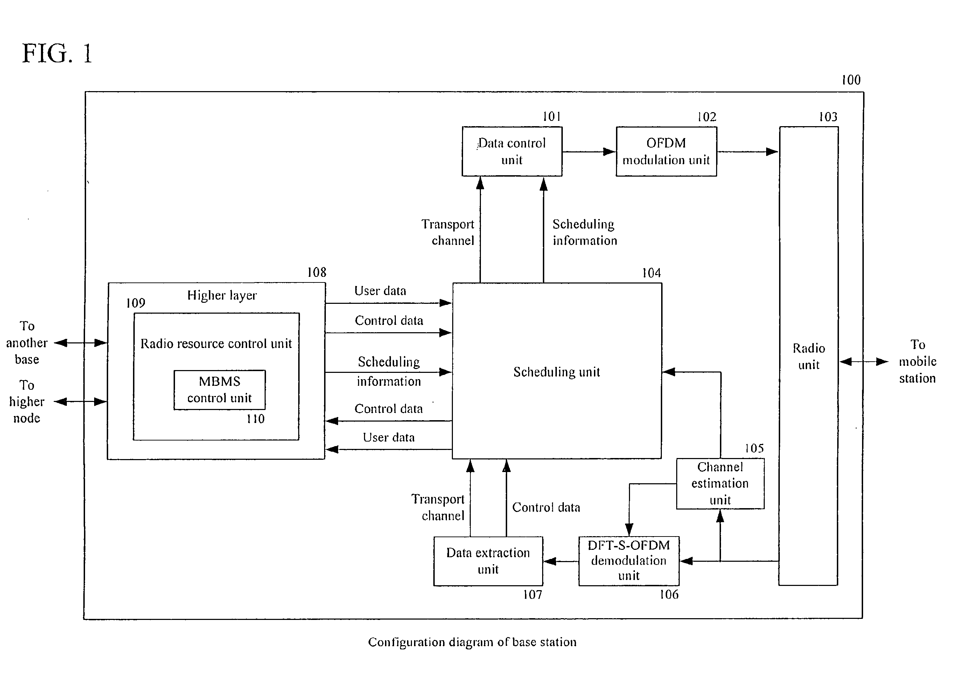

Figure 1 is a functional block diagram showing a configuration example of the base station apparatus used for the communication technique according to an embodiment of the present invention. As shown in Figure 1, the base station apparatus 100 is configured to include a data control unit 101, an OFDM modulation unit 102, a radio unit 103, a scheduling unit 104, a channel estimation unit 105, a DFT-Spread-OFDM (DFT-S-OFDM) demodulation unit 106, a data extraction unit 107 and a higher layer 108. Moreover, the radio unit 103, the scheduling unit 104, the channel estimation unit 105, the DFT-Spread-OFDM (DFT-S-OFDM) demodulation unit 106, the data extraction unit 107 and the higher layer 108 are included in a reception unit, and the data control unit 101, the OFDM modulation unit 102, the radio unit 103, the scheduling unit 104 and the higher layer 108 are included in a transmission unit.

The radio unit 103, the channel estimation unit 105, the DFT-Spread-OFDM (DFT-S-OFDM) demodulation unit 106 and the data extraction unit 107 perform processes for an uplink physical layer. The data control unit 101, the OFDM modulation unit 102 and the radio unit 103 perform processes for a downlink physical layer.

The data control unit 101 receives a transport channel and scheduling information from the scheduling unit 104. Then, based on the scheduling information, the transport channel and a channel generated in the physical layer are mapped to a physical channel. Then, the physical channel and a signal generated in the physical layer are mapped to a physical resource.

Each data mapped as described above is outputted to the OFDM modulation unit 102.

Based on the scheduling information from the scheduling unit 104 (including downlink Physical Resource Block (PRB) assignment information (for example, physical resource block position information such as a frequency and a time), a modulation scheme and a coding scheme (for example, 16QAM modulation, a 2/3 coding rate) corresponding to each PRB, and the like), the OFDM modulation unit 102 performs OFDM signal processing, such as coding, data modulation, serial-to-parallel conversion of an input signal, an IFFT (Inverse Fast Fourier Transform) process, CP (Cyclic Prefix) insertion, as well as filtering, for the data inputted from the data control unit 101, generates an OFDM signal and outputs the OFDM signal to the radio unit 103.

The radio unit 103 up-converts modulated data which has been inputted from the OFDM modulation unit 102, into a radio frequency to generate a radio signal, and transmits the radio signal via an antenna (not shown) to the mobile station apparatus 200.

Moreover, the radio unit 103 receives an uplink radio signal from the mobile station apparatus 200 via the antenna (not shown), down-converts the uplink radio signal into a baseband signal, and outputs received data to the channel estimation unit 105 and the DFT-S-OFDM demodulation unit 106.

The scheduling unit 104 performs processes for a Medium Access Control (MAC) layer. The scheduling unit 104 performs mapping between a logical channel and the transport channel, as well as downlink and uplink scheduling (an HARQ process, selection of a transport format, and the like) and the like.

In the downlink scheduling, based on uplink feedback information (downlink channel feedback information (including channel quality, the number of streams, precoding information and the like), ACK/NACK feedback information for downlink data, and the like) received from the mobile station apparatus 200, information on an available PRB in each mobile station apparatus, a downlink buffer status, scheduling information inputted from the higher layer 108, and the like, the scheduling unit 104 performs a selection process for a downlink transport format (also referred to as "transmission form", including Physical Resource Block assignment, a modulation scheme, a coding scheme and the like.) for modulating each data, and HARQ retransmission control. These pieces of the scheduling information used for the downlink scheduling are outputted to the data control unit 101.

Moreover, in the uplink scheduling, based on a result of estimating an uplink channel state (a radio propagation path state), which is outputted from the channel estimation unit 105, a resource assignment request from the mobile station apparatus 200, the information on the available PRB in each mobile station apparatus 200, the scheduling information inputted from the higher layer 108, and the like, the scheduling unit 104 performs a selection process for an uplink transport format (also referred to as "transmission form", including the Physical Resource Block (PRB) assignment, the modulation scheme, the coding scheme and the like) for modulating each data. These pieces of the scheduling information used for the uplink scheduling are outputted to the data control unit 101.

Moreover, the scheduling unit 104 generates an identification information group (MAC ID (also referred to as "RNTI", "User Equipment Identity (UEID)")). The MAC ID is an identifier generated in the Medium Access Control (MAC) layer.

Moreover, the scheduling unit 104 maps a downlink logical channel, which has been inputted from the higher layer 108, to the transport channel, and outputs the transport channel to the data control unit 101. Moreover, the scheduling unit 104 processes control data obtained in the uplink, and the transport channel, which have been inputted from the data extraction unit 107, if necessary, and then maps the control data and the transport channel to an uplink logical channel, and outputs the uplink logical channel to the higher layer 108.

In order to demodulate uplink data, the channel estimation unit 105 estimates the uplink channel state from an uplink Demodulation Reference Signal (DRS), and outputs the estimation result to the DFT-S-OFDM demodulation unit 106. Moreover, in order to perform the uplink scheduling, the uplink channel state is estimated from an uplink Sounding Reference Signal (SRS), and the estimation result is outputted to the scheduling unit 104. It should be noted that, while it is assumed that a single carrier scheme such as DFT-S-OFDM or the like is used for an uplink communication scheme, a multicarrier scheme such as an OFDM scheme may be used.

Based on the result of estimating the uplink channel state, which has been inputted from the channel estimation unit 105, the DFT-S-OFDM demodulation unit 106 performs DFT-S-OFDM signal processing, such as DFT transform, subcarrier mapping, the IFFT transform and the filtering, for the modulated data inputted from the radio unit 103, thereby applies a demodulation process, and outputs the data to the data extraction unit 107.

The data extraction unit 107 performs a Cyclic Redundancy Check (CRC) for the data inputted from the DFT-S-OFDM demodulation unit 106, confirms whether the data is true or false, and also outputs a confirmation result (acknowledgement: ACK/negative acknowledgement: NACK) to the scheduling unit 104. Moreover, the data extraction unit 107 divides the data inputted from the DFT-S-OFDM demodulation unit 106 into the transport channel and the control data in the physical layer, and outputs the transport channel and the control data to the scheduling unit 104. The divided control data includes the uplink feedback information (the downlink channel feedback information (also referred to as "CQI feedback information", "channel quality information", "channel state information".) and the ACK/NACK feedback information for the downlink data), and the like, which have been notified by the mobile station apparatus 200.

The higher layer 108 performs processes for a Packet Data Convergence Protocol (PDCP) layer, a Radio Link Control (RLC) layer, and a Radio Resource Control (RRC) layer. The higher layer 108 has a radio resource control unit 109 (also referred to as "second control unit"). The radio resource control unit 109 has an MBMS control unit 110.

The radio resource control unit 109 performs management of various setting information, management of system information, paging control, management of a communication state of each mobile station apparatus, management of movement such as handover, management of a buffer status for each mobile station apparatus, management of connection settings of unicast and multicast bearers, and the like.

Moreover, the MBMS control unit 110 manages an MBMS service (also referred to as "MBMS transmission data".) and manages the identification information group (also referred to as "MAC ID" (RNTI, the User Equipment Identity (UEID))). In other words, the MBMS control unit 110 in the base station apparatus 100 included in an SCPTM cell manages mapping information between an MBMS service ID and an MBMS short transmission ID. Furthermore, the MBMS control unit 110 also manages mapping information between the MBMS short transmission ID and an MBMS group ID (MBMS-RNTI). The MBMS control unit 110 broadcasts the mapping information between the MBMS short transmission ID and the MBMS service ID, in MBMS-related information (included in a Broadcast Control Channel (BCCH) and/or a Multicast Control Channel (MCCH)), to each mobile station apparatus. Moreover, the MBMS control unit 110 controls to start and stop transmission of the MBMS service. Moreover, if an MBMS service start request message including the MBMS short transmission ID is received from the mobile station apparatus 200, the MBMS control unit 110 starts the transmission of the MBMS service.

### <Mobile Station Apparatus>

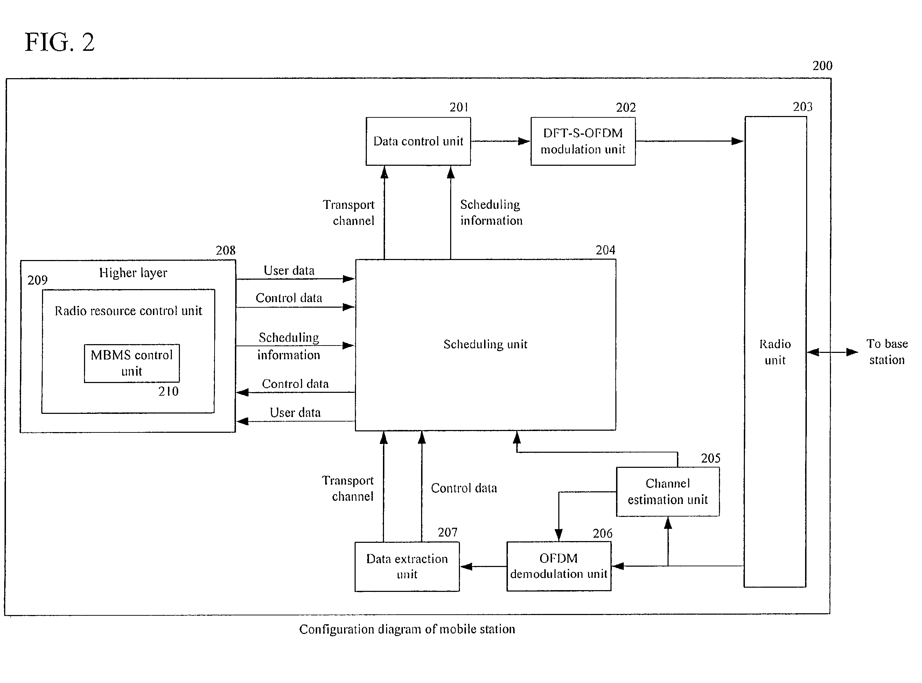

Figure 2 is a functional block diagram showing a configuration example of the mobile station apparatus in the present embodiment. As shown in Figure 2, the mobile station apparatus 200 is configured to include a data control unit 201, a DFT-S-OFDM modulation unit 202, a radio unit 203, a scheduling unit 204, a channel estimation unit 205, an OFDM demodulation unit 206, a data extraction unit 207 and a higher layer 208.

Moreover, the data control unit 201, the DFT-S-OFDM modulation unit 202, the radio unit 203, the scheduling unit 204 and the higher layer 208 are included in a transmission unit, and the radio unit 203, the scheduling unit 204, the channel estimation unit 205, the OFDM demodulation unit 206, the data extraction unit 207 and the higher layer 208 are included in a reception unit.

The data control unit 201, the DFT-S-OFDM modulation unit 202 and the radio unit 203 perform the processes for the uplink physical layer. The radio unit 203, the channel estimation unit 205, the OFDM demodulation unit 206 and the data extraction unit 207 perform the processes for the downlink physical layer.

The data control unit 201 receives the transport channel and the scheduling information from the scheduling unit 204. Then, based on the scheduling information, the transport channel and the channel generated in the physical layer are mapped to the physical channel. Then, the physical channel and the signal generated in the physical layer are mapped to the physical resource.

Each data mapped in this way is outputted to the DFT-S-OFDM modulation unit 202.

The DFT-S-OFDM modulation unit 202 performs the DFT-S-OFDM signal processing, such as the data modulation, a DFT (Discrete Fourier Transform) process, the subcarrier mapping, the IFFT (Inverse Fast Fourier Transform) process, the CP insertion and the filtering, for the data inputted from the data control unit 201, and generates and outputs a DFT-S-OFDM signal to the radio unit 203.

It should be noted that, while it is assumed that the single carrier scheme such as the DFT-S-OFDM or the like is used for the uplink communication scheme, the multicarrier scheme such as the OFDM scheme may be used instead thereof.

The radio unit 203 up-converts modulated data which has been inputted from the DFT-S-OFDM modulation unit 202, into a radio frequency to generate a radio signal, and transmits the radio signal via an antenna (not shown) to the base station apparatus 100.

Moreover, the radio unit 203 receives the radio signal modulated with the downlink data, from the base station apparatus 100, via the antenna (not shown), down-converts the radio signal into a baseband signal, and outputs received data to the channel estimation unit 205 and the OFDM demodulation unit 206.

The scheduling unit 204 performs the processes for the Medium Access Control (MAC) layer. The scheduling unit 204 performs the mapping between the logical channel and the transport channel, as well as the downlink and uplink scheduling (the HARQ process, the selection of the transport format, and the like) and the like.

In the downlink scheduling, based on scheduling information (the transport format, HARQ retransmission information and the like) from the base station apparatus 100 and the higher layer 208, the scheduling unit 204 performs reception control and the HARQ retransmission control for the transport channel, a physical signal and the physical channel.

In the uplink scheduling, based on an uplink buffer status inputted from the higher layer 208, uplink scheduling information (the transport format, the HARQ retransmission information and the like) from the base station apparatus 100, which has been inputted from the data extraction unit 207, the scheduling information inputted from the higher layer 208, and the like, the scheduling unit 204 performs a scheduling process for mapping the uplink logical channel, which has been inputted from the higher layer 208, to the transport channel. It should be noted that, for the uplink transport format, the information notified by the base station apparatus 100 is used. These pieces of the scheduling information are outputted to the data control unit 201.

Moreover, the scheduling unit 204 maps the uplink logical channel, which has been inputted from the higher layer 208, to the transport channel, and outputs the transport channel to the data control unit 201. Moreover, the scheduling unit 204 also outputs the downlink CQI feedback information inputted from the channel estimation unit 205, and the ACK/NACK feedback information which is the confirmation result of the Cyclic Redundancy Check (CRC) inputted from the data extraction unit 207, to the data control unit 201. Moreover, the scheduling unit 204 processes control data obtained in the downlink and the transport channel, which have been inputted from the data extraction unit 207, if necessary, and then maps the control data and the transport channel to the downlink logical channel, and outputs the downlink logical channel to the higher layer 208.

In order to demodulate the downlink data, the channel estimation unit 205 estimates a downlink channel state from a downlink Reference Signal (RS), and outputs a result of the estimation to the OFDM demodulation unit 206. Moreover, in order to notify the base station apparatus 100 of the result of estimating the downlink channel state (the radio propagation path state), the channel estimation unit 205 estimates the downlink channel state from the downlink Reference Signal (RS), converts the estimation result into a downlink channel quality indicator (CQI) or the like, includes the downlink channel quality indicator (CQI) in the downlink channel feedback information, and outputs the downlink channel quality indicator (CQI) in the downlink channel feedback information to the scheduling unit 204.

Based on the result of estimating the downlink channel state, which has been inputted from the channel estimation unit 205, the OFDM demodulation unit 206 applies an OFDM demodulation process to the modulated data inputted from the radio unit 203, and outputs the data to the data extraction unit 207.

The data extraction unit 207 performs the Cyclic Redundancy Check (CRC) for the data inputted from the OFDM demodulation unit 206, confirms whether the data is true or false, and also outputs a confirmation result (ACK/NACK feedback information) to the scheduling unit 204. Moreover, the data extraction unit 207 divides the data inputted from the OFDM demodulation unit 206 into the transport channel and the control data in the physical layer, and outputs the transport channel and the control data to the scheduling unit 204. The divided control data includes downlink or uplink resource assignment, and the uplink scheduling information such as the HARQ retransmission information.

The higher layer 208 performs the processes for the Packet Data Convergence Protocol (PDCP) layer, the Radio Link Control (RLC) layer, and the Radio Resource Control (RRC) layer. The higher layer 208 has a radio resource control unit 209 (also referred to as "second control unit"). Furthermore, the radio resource control unit 209 has an MBMS control unit 210.

The radio resource control unit 209 performs the management of the various setting information, the management of the system information, the paging control, the management of the communication state of the station itself, the management of the movement such as the handover, the management of the buffer status of the station itself, the management of the connection settings of the unicast and multicast bearers, and the like. Moreover, the radio resource control unit 209 manages a reception state of the MBMS transmission data.

The MBMS control unit 210 manages a correspondence relationship among the MBMS service ID, the MBMS short transmission ID and the MBMS group ID (MBMS-RNTI), based on the information received from the base station apparatus included in the SCPTM cell. In other words, the identification information group (also referred to as "MAC ID" (RNTI, the User Equipment Identity (UEID))) is managed. Moreover, if the MBMS control unit 210 detects that an MBMS service desired to be received is not being transmitted, the MBMS control unit 210 creates and transmits the MBMS service start request message including the MBMS short transmission ID, to the base station apparatus 100. Moreover, if the MBMS control unit 210 detects that the MBMS service desired to be received is being transmitted, the MBMS control unit 210 sets the corresponding MBMS group ID (MBMS-RNTI) to be monitored by a Physical Downlink Control Channel (PDCCH).

### <Channel Configuration>

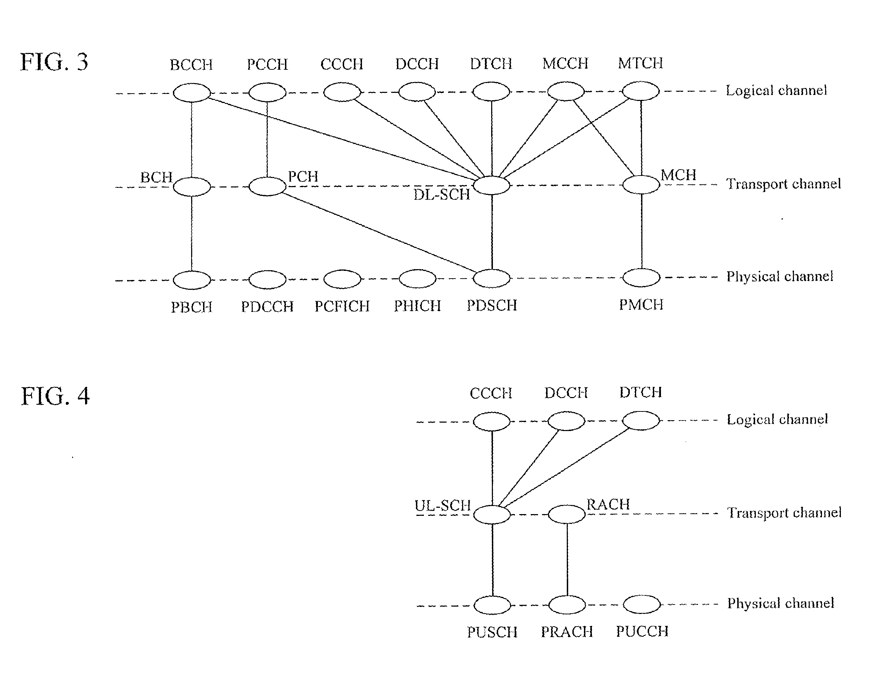

Next, a channel configuration in EUTRA will be described. As shown in Figures 3 and 4, EUTRA channels are classified into the logical channel, the transport channel and the physical channel. Figure 3 shows downlink channels, and Figure 4 shows uplink channels. The logical channel defines a kind of a data transmission service that is transmitted and received in the Medium Access Control (MAC) layer. The transport channel defines what property is included in data transmitted via a radio interface, and how the data is transmitted. The physical channel is a physical channel for carrying the transport channel.

The logical channel includes the Broadcast Control Channel (BCCH), a Paging Control Channel (PCCH), a Common Control Channel (CCCH), a Dedicated Control Channel (DCCH), a Dedicated Traffic Channel (DTCH), the Multicast Control Channel (MCCH), and a Multicast Traffic Channel (MTCH).

The transport channel includes a Broadcast Channel (BCH), a Paging Channel (PCH), a Downlink Shared Channel (DL-SCH), a Multicast Channel (MCH), an Uplink Shared Channel (UL-SCH), and a Random Access Channel (RACH).

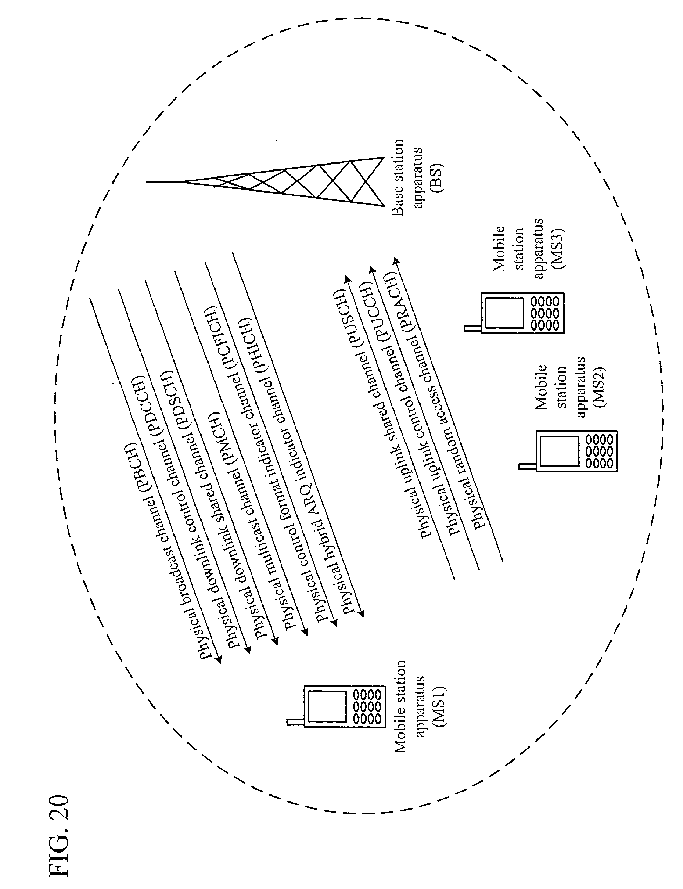

The physical channel includes a Physical Broadcast Channel (PBCH), the Physical Downlink Control Channel (PDCCH), a Physical Downlink Shared Channel (PDSCH), a Physical Multicast Channel (PMCH), a Physical Uplink Shared Channel (PUSCH), a Physical Random Access Channel (PRACH), a Physical Uplink Control Channel (PUCCH), a Physical Control Format Indicator Channel (PCFICH), and a Physical Hybrid ARQ Indicator Channel (PHICH), which are shown in the above described Figure 20.

First, the logical channel will be described. The Broadcast Control Channel (BCCH) is a downlink channel used for broadcasting system control information. The Paging Control Channel (PCCH) is a downlink channel used for transmitting paging information, and is used when a network does not know a location cell of the mobile station apparatus. The Common Control Channel (CCCH) is a channel used for transmitting control information between the mobile station apparatus and the network, and is used by the mobile station apparatus which does not have a Radio Resource Control (RRC) connection with the network. The Dedicated Control Channel (DCCH) is a point-to-point bidirectional channel, and is a channel used for transmitting dedicated control information between the mobile station apparatus and the network. The Dedicated Control Channel (DCCH) is used by the mobile station apparatus having the RRC connection. The Dedicated Traffic Channel (DTCH) is a point-to-point bidirectional channel, is a channel dedicated to one mobile station apparatus, and is used for transferring user information (unicast data).

The Multicast Control Channel (MCCH) is a downlink channel used for performing point-to-multipoint transmission of MBMS control information from the network to the mobile station apparatus, and is used for receiving one or several Multicast Traffic Channels (MTCHs). The Multicast Traffic Channel (MTCH) is a downlink channel used for performing the point-to-multipoint transmission of traffic data (the MBMS transmission data) from the network to the mobile station apparatus. It should be noted that the Multicast Control Channel (MCCH) and the Multicast Traffic Channel (MTCH) are received only by the mobile station apparatus which receives the MBMS.

Next, the transport channel will be described. The Broadcast Channel (BCH) needs to be broadcasted to the entire cell, in a fixed and predefined transport format (transmission form). In the Downlink Shared Channel (DL-SCH), HARQ, dynamically adaptive radio link control, Discontinuous Reception (DRX) and MBMS transmission are supported, and the Downlink Shared Channel (DL-SCH) needs to be broadcasted to the entire cell. Moreover, in the Downlink Shared Channel (DL-SCH), beam forming can be used, and dynamic resource assignment and quasi-static resource assignment are supported. In the Paging Channel (PCH), the DRX is supported, and the Paging Channel (PCH) needs to be broadcasted to the entire cell. Moreover, the Paging Channel (PCH) is mapped to the physical resource which is dynamically used for the traffic channel or the other control channel, that is, the Physical Downlink Shared Channel (PDSCH). The Multicast Channel (MCH) needs to be broadcasted to the entire cell. Moreover, in the Multicast Channel (MCH), the quasi-static resource assignment is supported, such as MBSFN (MBMS Single Frequency Network) Combining, and a time frame using an extended Cyclic Prefix (CP), in the MBMS transmission from a plurality of cells. In the Uplink Shared Channel (UL-SCH), the HARQ and the dynamically adaptive radio link control are supported. Moreover, in the Uplink Shared Channel (UL-SCH), the beam forming can be used, and the dynamic resource assignment and the quasi-static resource assignment are supported. In the Random Access Channel (RACH), limited control information is transmitted, and there is a conflict risk.

Next, the physical channel will be described. The Physical Broadcast Channel (PBCH) maps the Broadcast Channel (BCH) at intervals of 40 milliseconds. A timing of 40 milliseconds is blind-detected (that is, no explicit signaling is performed for presenting the timing). Moreover, a sub-frame including the Physical Broadcast Channel (PBCH) can be decoded by only the sub-frame (is self-decodable), and is not divided to be transmitted in a plurality of number of times. The Physical Downlink Control Channel (PDCCH) is a channel used for notifying the mobile station apparatus of resource assignment in the Downlink Shared Channel (PDSCH), hybrid automatic retransmission request (HARQ) information for the downlink data, and uplink transmission permission (uplink grant) which is resource assignment in the Uplink Shared Channel (PUSCH). The Physical Downlink Shared Channel (PDSCH) is a channel used for transmitting the downlink data or the paging information. The Physical Multicast Channel (PMCH) is a channel used for transmitting the Multicast Channel (MCH), and the downlink Reference Signal (RS), an uplink Reference Signal (the uplink Demodulation Reference Signal (DRS), and/or the uplink Sounding Reference Signal (SRS)), and a physical downlink Synchronization Signal are separately arranged. The Physical Uplink Shared Channel (PUSCH) is a channel used for transmitting the uplink data. The Physical Random Access Channel (PRACH) is a channel used for transmitting a random access preamble, and has a guard time. The Physical Uplink Control Channel (PUCCH) is a channel used for transmitting the downlink channel quality indicator (CQI), a Scheduling Request (SR), HARQ acknowledgement (ACK)/negative acknowledgement (NACK) for the downlink data, and the like. The Physical Control Format Indicator Channel (PCFICH) is a channel used for notifying the mobile station apparatus of the number of OFDM symbols used for the Physical Downlink Control Channel (PDCCH), and is transmitted in each sub-frame. The Physical Hybrid ARQ Indicator Channel (PHICH) is a channel used for transmitting the HARQ ACK/NACK for the uplink data, in the downlink.

Moreover, although not described in Figures 3 and 4, in addition to the above description, there are signals (physical signals) generated in the physical layer. The physical signals include the physical downlink Synchronization Signal, the downlink Reference Signal (RS), and the uplink Reference Signal (the uplink Demodulation Reference Signal (DRS) and the uplink Sounding Reference Signal (SRS)). The physical downlink Synchronization Signal is a signal used for obtaining downlink synchronization and identifying a cell ID of the base station apparatus. Moreover, the downlink Reference Signal (RS) is a signal used for demodulating the downlink data and estimating the downlink channel state. Moreover, the uplink Demodulation Reference Signal (DRS) is a signal used for demodulating the uplink data. Moreover, the uplink Sounding Reference Signal (SRS) is a signal used for performing the uplink scheduling.

### <Channel Mapping>

Moreover, as shown in Figure 3, in the downlink, the mapping between the transport channel and the physical channel is performed as follows. The Broadcast Channel (BCH) is mapped to the Physical Broadcast Channel (PBCH). The Multicast Channel (MCH) is mapped to the Physical Multicast Channel (PMCH). The Paging Channel (PCH) and the Downlink Shared Channel (DL-SCH) are mapped to the Physical Downlink Shared Channel (PDSCH). The Physical Downlink Control Channel (PDCCH), the Physical Hybrid ARQ Indicator Channel (PHICH), and the Physical Control Format Indicator Channel (PCFICH) are channels generated in the physical layer, and are used in the physical channel alone.

On the other hand, in the uplink, the mapping between the transport channel and the physical channel is performed as shown in Figure 4. The Uplink Shared Channel (UL-SCH) is mapped to the Physical Uplink Shared Channel (PUSCH). The Random Access Channel (RACH) is mapped to the Physical Random Access Channel (PRACH). The Physical Uplink Control Channel (PUCCH) is a channel generated in the physical layer, and is used in the physical channel alone.

Moreover, as shown in Figure 3, in the downlink, the mapping between the logical channel and the transport channel is performed as follows. The Paging Control Channel (PCCH) is mapped to the Paging Channel (PCH). The Broadcast Control Channel (BCCH) is mapped to the Broadcast Channel (BCH) and the Downlink Shared Channel (DL-SCH). The Common Control Channel (CCCH), the Dedicated Control Channel (DCCH), and the Dedicated Traffic Channel (DTCH) are mapped to the Downlink Shared Channel (DL-SCH). The Multicast Control Channel (MCCH) is mapped to the Downlink Shared Channel (DL-SCH) or the Multicast Channel (MCH). The Multicast Traffic Channel (MTCH) is mapped to the Downlink Shared Channel (DL-SCH) or the Multicast Channel (MCH). It should be noted that the mapping from the Multicast Control Channel (MCCH) and the Multicast Traffic Channel (MTCH) to the Multicast Channel (MCH) is performed at a time of MBSFN Transmission, whereas, at a time of SCPTM Transmission, the Multicast Control Channel (MCCH) and the Multicast Traffic Channel (MTCH) are mapped to the Downlink Shared Channel (DL-SCH).

On the other hand, as shown in Figure 4, in the uplink, the mapping between the logical channel and the transport channel is performed as follows. The Common Control Channel (CCCH), the Dedicated Control Channel (DCCH), and the Dedicated Traffic Channel (DTCH) are mapped to the Uplink Shared Channel (UL-SCH). The Random Access Channel (RACH) is not mapped to the logical channel.

### <Radio Frame Configuration>

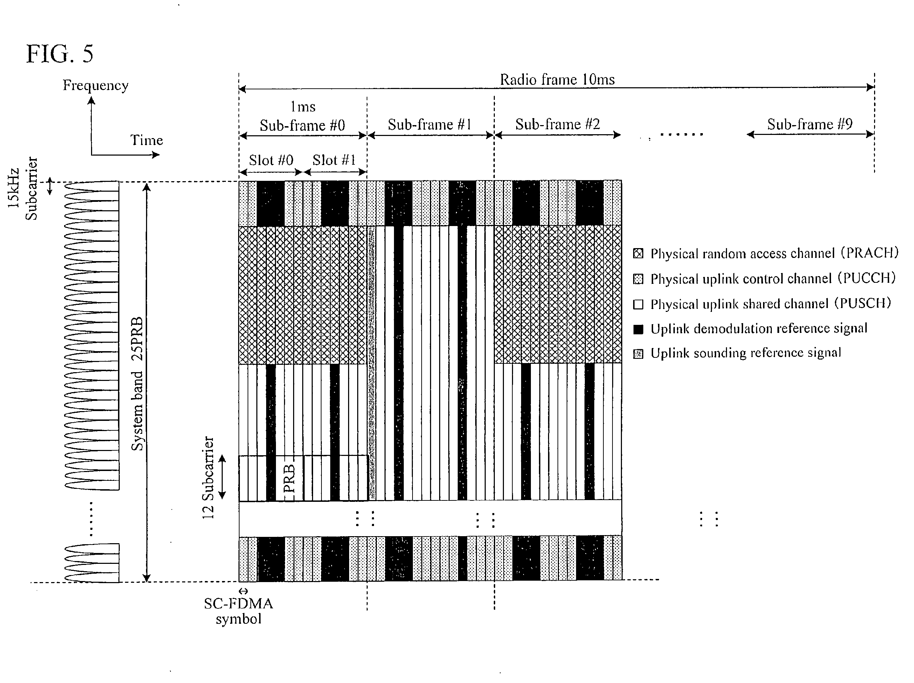

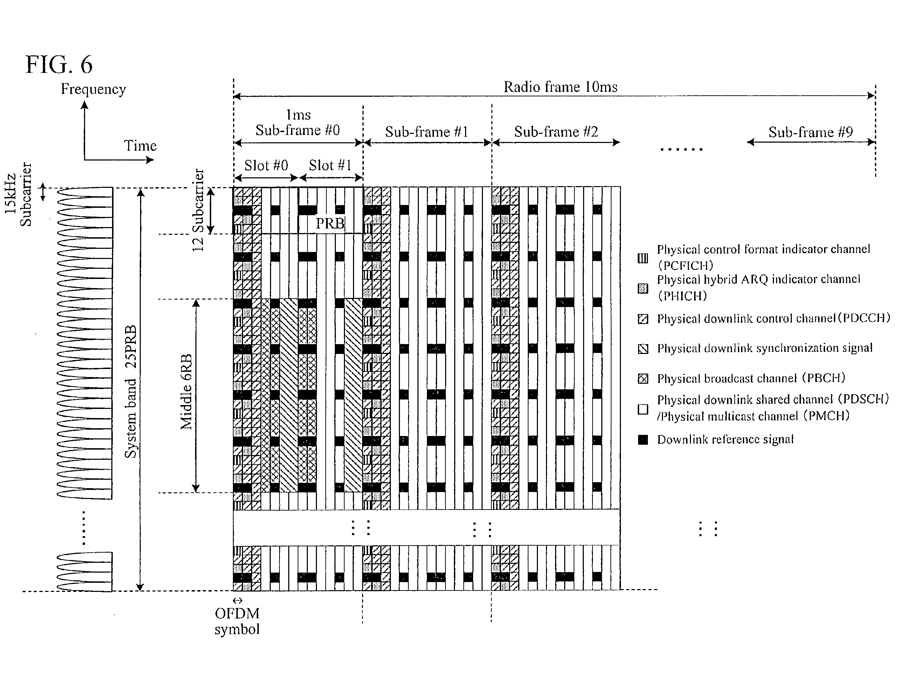

Next, a frame configuration in the EUTRA will be described. The frame configuration in the downlink is shown in Figure 6, and the frame configuration in the uplink is shown in Figure 5.

As shown in Figures 5 and 6, a radio frame identified by a System Frame Number (SFN) includes 10 milliseconds. Moreover, one sub-frame includes one millisecond, and the radio frame includes 10 sub-frames.

One sub-frame is divided into two slots. If a normal CP is used, a downlink slot includes seven OFDM symbols, and an uplink slot includes seven SC-FDMA (Single Carrier-Frequency Division Multiple Access) symbols (DFT-S-OFDM symbols). It should be noted that if a long CP (also referred to as "extended CP") is used, the downlink slot includes six OFDM symbols, and the uplink slot includes six SC-FDMA symbols (DFT-S-OFDM symbols).

Moreover, one slot is divided into a plurality of blocks in a frequency direction. 12 subcarriers of 15 kHz are set as a unit in the frequency direction and are included in one Physical Resource Block (PRB). As the number of the Physical Resource Blocks (PRBs), 6 to 110 are supported depending on a system bandwidth. The downlink and uplink resource assignment is performed in units of sub-frames in a time direction, and in units of Physical Resource Blocks (PRBs) in the frequency direction. In other words, two slots within the sub-frame are assigned by one resource assignment signal.

A unit including the subcarrier and the OFDM symbol, or the subcarrier and the SC-FDMA symbol, is referred to as "resource element". In a resource mapping process in the physical layer, a modulation symbol or the like is mapped to each resource element.

In processes for downlink transport channels in the physical layer, giving a 24-bit Cyclic Redundancy Check (CRC) to the Physical Downlink Shared Channel (PDSCH), channel coding (transmission path coding), a physical layer HARQ process, channel interleaving, scrambling, modulation (QPSK, 16QAM, 64QAM), layer mapping, precoding, resource mapping, antenna mapping and the like are performed.

On the other hand, in processes for uplink transport channels in the physical layer, giving a 24-bit CRC to the Physical Uplink Shared Channel (PUSCH), the channel coding (transmission path coding), the physical layer HARQ process, the scrambling, the modulation (QPSK, 16QAM, 64QAM), the resource mapping, the antenna mapping and the like are performed.

As shown in Figure 6, the Physical Downlink Control Channel (PDCCH), the Physical Hybrid ARQ Indicator Channel (PHICH) and the Physical Control Format Indicator Channel (PCFICH) are arranged within first three OFDM symbols. In the Physical Downlink Control Channel (PDCCH), the transport format (which defines the modulation scheme, the coding scheme, a transport block size and the like), the resource assignment, and HARQ information, for the Downlink Shared Channel (DL-SCH) and the Paging Channel (PCH), are transmitted. Moreover, in the Physical Downlink Control Channel (PDCCH), the transport format (which defines the modulation scheme, the coding scheme, the transport block size and the like), the resource assignment, and the HARQ information, for the Uplink Shared Channel (UL-SCH), are transmitted. Moreover, a plurality of the Physical Downlink Control Channels (PDCCHs) are supported, and the mobile station apparatus monitors a set of the Physical Downlink Control Channels (PDCCHs).

The Physical Downlink Shared Channel (PDSCH) assigned by the Physical Downlink Control Channel (PDCCH) is mapped to the same sub-frame as the Physical Downlink Control Channel (PDCCH). The Physical Uplink Shared Channel (PUSCH) assigned by the Physical Downlink Control Channel (PDCCH) is mapped to a sub-frame at a predefined position. For example, if a downlink sub-frame number of the Physical Downlink Control Channel (PDCCH) is N, the Physical Uplink Shared Channel (PUSCH) is mapped to an uplink sub-frame of the number N + 4.

Moreover, in the up and downlink resource assignment by the Physical Downlink Control Channel (PDCCH), the mobile station apparatus is specified by using a 16-bit identification information group (MAC ID (also referred to as "RNTI", "User Equipment Identity (UEID)")). In other words, this 16-bit identification information group (MAC ID) is included in the Physical Downlink Control Channel (PDCCH). It should be noted that the MAC ID is the identifier generated in the Medium Access Control (MAC) layer.

Moreover, the Physical Broadcast Channel (PBCH), and the physical downlink Synchronization Signal are arranged in a band of six Physical Resource Blocks (PRBs) in the middle of a system band. The physical downlink Synchronization Signal is transmitted in sixth and seventh OFDM symbols in each slot in first (sub-frame #0) and fifth (sub-frame #4) sub-frames. The Physical Broadcast Channel (PBCH) is transmitted in fourth and fifth OFDM symbols in a first slot (slot #0) as well as first and second OFDM symbols in a second slot (slot #1), in the first (sub-frame #0) sub-frame.

Moreover, the downlink Reference Signal (RS) used for measuring a downlink state and demodulating the downlink data is arranged in first and second OFDM symbols, as well as a third OFDM symbol from the end, in each slot.

It should be noted that the Physical Multicast Channel (PMCH) is used only at the time of the MBSFN Transmission, and is arranged in a sub-frame which is not used as a unicast sub-frame. In other words, the Physical Multicast Channel (PMCH) is transmitted in a sub-frame other than the first (sub-frame #0) and sixth (sub-frame #5) sub-frames.

On the other hand, as shown in Figure 5, the uplink Demodulation Reference Signal (DRS) used for demodulating the Physical Uplink Shared Channel (PUSCH) is transmitted in a fourth SC-FDMA symbol in each slot. Moreover, the uplink Sounding Reference Signal (SRS) used for measuring an uplink state is transmitted in a beginning SC-FDMA symbol in the sub-frame. It should be noted that the uplink Demodulation Reference Signal (DRS) used for demodulating the Physical Uplink Control Channel (PUCCH) is defined for each format of the Physical Uplink Control Channel (PUCCH), and is transmitted in third, fourth and fifth SC-FDMA symbols in each slot, or second and sixth SC-FDMA symbols in each slot.

Moreover, the Physical Random Access Channel (PRACH) includes a bandwidth of six Physical Resource Blocks (PRBs) in the frequency direction and one sub-frame in the time direction. The Physical Random Access Channel (PRACH) is transmitted from the mobile station apparatus to the base station apparatus for making requests (an uplink resource request, an uplink synchronization request, a request to resume downlink data transmission, a handover request, a connection setting request, a reconnection request, an MBMS service request, and the like) for various reasons.

The Physical Uplink Control Channel (PUCCH) is arranged on both ends of the system band, and is configured in units of Physical Resource Blocks. In the Physical Uplink Control Channel (PUCCH), frequency hopping is performed so that the both ends of the system band are alternately used by the slots.

The Physical Uplink Shared Channel (PUSCH) is arranged in a resource which is not used by the Physical Uplink Control Channel (PUCCH) or the Physical Random Access Channel (PRACH).

### <Regarding MBMS-RNTI, MBMS short transmission ID>

The MBMS service ID is an identifier for identifying the MBMS service provided by a mobile communication system or an operator. A user can specify the MBMS service from the MBMS service ID, and can select the MBMS service desired to be viewed.

The MBMS short transmission ID is an identifier for identifying the MBMS service provided within the SCPTM cell. The number of MBMS services which can be provided within the SCPTM cell is unique to the cell or unique to the system. A maximum value of the MBMS short transmission ID of the MBMS service is the number of MBMS services which can be provided within the SCPTM cell. In other words, the number of MBMS services which are currently being provided within the SCPTM cell is equal to or less than the number of MBMS services which can be provided within the SCPTM cell.

The MBMS group ID (MBMS-RNTI) designates the mobile station apparatus which should perform reception, when scheduling of a downlink resource including the MBMS service (the Physical Downlink Shared Channel (PDSCH)) is performed. The MBMS group ID (MBMS-RNTI) uses a part of the 16-bit identification information group (MAC ID) arranged in the Physical Downlink Control Channel (PDCCH). Thereby, a signal for the resource assignment using a Cell - Radio Network Temporary Identity (C-RNTI) for designating the mobile station apparatus when the unicast data is transmitted and received, and a signal for the resource assignment using the MBMS group ID (MBMS-RNTI) for designating multicast data (the MBMS service) can be shared.

### <Regarding Mapping between MBMS short transmission ID and MBMS-RNTI>

As methods of mapping the MBMS group ID (MBMS-RNTI) corresponding to the MBMS short transmission ID, there are four methods as follows.

It should be noted that, in the mobile communication system which provides a Multimedia Broadcast Multicast Service (MBMS), the mobile station apparatus which communicates with the base station apparatus includes a first control unit which maps the MBMS short transmission ID for identifying the MBMS service transmitted within the cell, to the MBMS group ID (MBMS-RNTI) for identifying a group of the mobile stations to which multicast is performed.

Moreover, the MBMS short transmission ID is mapped to the MBMS service provided in the mobile communication system.

Moreover, the mobile station apparatus using a first mapping method specifies mapping between the MBMS group ID (MBMS-RNTI) and the MBMS short transmission ID, based on predefined information.

Moreover, the mobile station apparatus using second, third or fourth mapping information specifies the mapping between the MBMS group ID (MBMS-RNTI) and the MBMS short transmission ID, based on information notified by the base station apparatus.

Moreover, the mobile station apparatus using the second mapping information specifies the mapping between the MBMS group ID (MBMS-RNTI) and the MBMS short transmission ID, based on an arrangement position of the MBMS group ID (MBMS-RNTI), in information indicating mapping between the MBMS short transmission ID and the MBMS group ID (MBMS-RNTI), which is notified by the base station apparatus.

Moreover, a base ID and a flexible ID are included in the information indicating the mapping between the MBMS short transmission ID and the MBMS group ID (MBMS-RNTI), which is notified by the base station apparatus, and the mobile station apparatus using the third mapping information specifies the mapping between the MBMS group ID (MBMS-RNTI) and the MBMS short transmission ID based on the base ID and the flexible ID.

Moreover, a base ID is included in the information indicating the mapping between the MBMS short transmission ID and the MBMS group ID (MBMS-RNTI), which is notified by the base station apparatus, and the mobile station apparatus using the fourth mapping information specifies the mapping between the MBMS group ID (MBMS-RNTI) and the MBMS short transmission ID based on the base ID.

Moreover, if the second, third or fourth mapping information is used, the MBMS group ID (MBMS-RNTI) is assigned from the Cell - Radio Network Temporary Identity (C-RNTI) which is used for designating the mobile station apparatus when the unicast data is transmitted and received, in the identification information group (MAC ID).

Moreover, the mobile station apparatus transmits the MBMS service start request message including the MBMS short transmission ID, to the base station apparatus, in order to request transmission of the MBMS service desired to be received.

Moreover, in scheduling of the MBMS service, the MBMS group ID (MBMS-RNTI) is included in the Physical Downlink Control Channel (PDCCH).

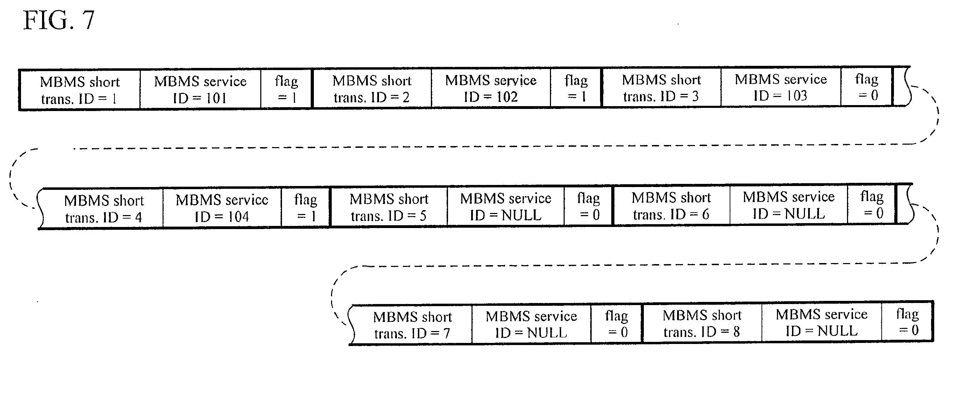

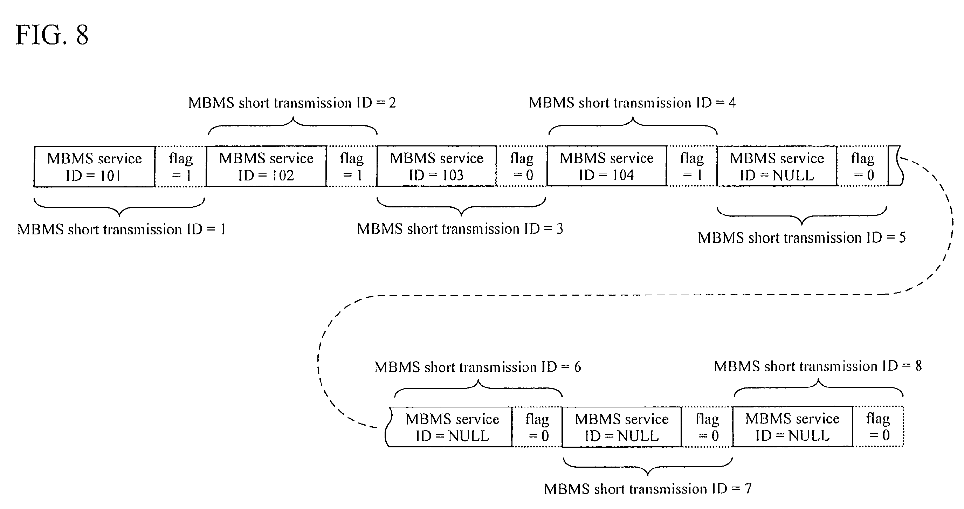

First, one method is a method of specifying the MBMS group ID (MBMS-RNTI) corresponding to the MBMS short transmission ID (the first mapping method). In this case, the base station apparatus transmits the mapping information between MBMS short transmission ID and MBMS service ID, in the MBMS-related information, to the mobile station apparatus. An example in which this mapping relationship is explicitly shown is shown in Figure 7, and an example in which this mapping relationship is implicitly shown is shown in Figure 8.

In Figure 7, the MBMS short transmission ID and the MBMS service ID are transmitted in a manner in which the MBMS short transmission ID and the MBMS service ID are explicitly shown in a one-to-one manner. In other words, in Figure 7, since the MBMS service ID corresponding to the MBMS short transmission ID 1 is 101, and a transmission flag (flag) is 1, it is indicated that this MBMS service is currently being provided. Since the MBMS service ID corresponding to the MBMS short transmission ID 2 is 102, and the transmission flag (flag) is 1, it is indicated that this MBMS service is currently being provided. Since the MBMS service ID corresponding to the MBMS short transmission ID 3 is 103, and the transmission flag (flag) is 0, it is indicated that this MBMS service can be provided while this MBMS service is currently not being transmitted. Since the MBMS service ID corresponding to the MBMS short transmission ID 4 is 104, and the transmission flag (flag) is 1, it is indicated that this MBMS service is currently being provided. Moreover, since the MBMS service IDs corresponding to the MBMS short transmission IDs 5 to 8 are NULL, and the transmission flags (flags) are 0, it is indicated that four more MBMS services other than the above four MBMS services can be provided.

On the other hand, Figure 8 shows an example in which, while the same information as the information shown in Figure 7 is included, only the MBMS service ID, in the MBMS short transmission ID and the MBMS service ID, is explicitly transmitted, and the MBMS service IDs are transmitted in a manner in which the MBMS service IDs are arranged in order of the MBMS short transmission ID. In this case, the MBMS short transmission ID can be judged by a position for notifying of the MBMS service ID which is currently being provided in this SCPTM cell.

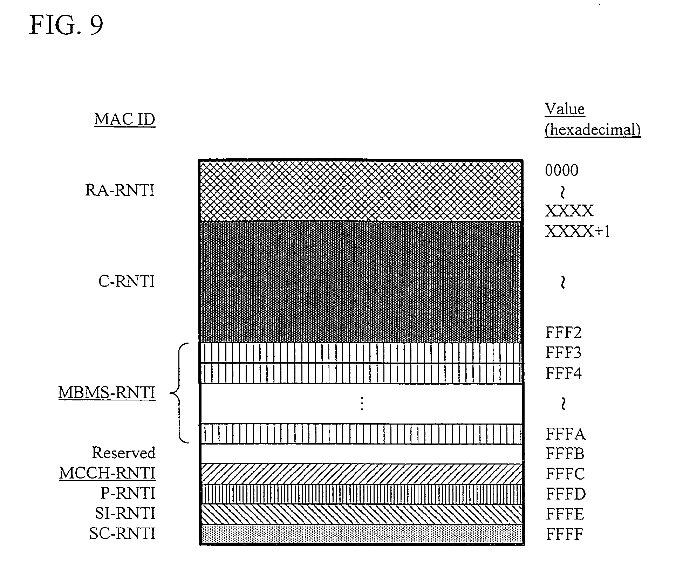

Figure 9 is a conceptual diagram showing a space of the identification information group (MAC ID (also referred to as "RNTI", "User Equipment Identity (UEID)")) which is mapped to the Physical Downlink Control Channel (PDCCH) in the above described first mapping method. The identification information group (MAC ID) in Figure 9 is a generic name of identifiers used for performing communication between the base station apparatus and the mobile station apparatus, and is configured to have 16-bit length, and is assigned to the mobile station apparatus by the base station apparatus.

As shown in Figure 9, the radio resource control unit 109 (including the MBMS control unit 110) in the base station apparatus (Figure 1) manages the 16-bit identification information group (MAC ID) by use, such as the Cell - Radio Network Temporary Identity (C-RNTI), a Random Access - Radio Network Temporary Identity (RA-RNTI), a Paging - Radio Network Temporary Identity (P-RNTI), a System Information - Radio Network Temporary Identity (SI-RNTI), a System information Change - Radio Network Temporary Identity (SC-RNTI), a Multicast Control Channel identifier (MCCH-RNTI), and the MBMS group ID (MBMS-RNTI), and also manages which mobile station (group) has been assigned with the identification information group (MAC ID).

It should be noted that the Cell - Radio Network Temporary Identity (C-RNTI) is an identifier which is widely used when the communication is individually performed between the base station apparatus and the mobile station apparatus, and a different identifier is assigned to each mobile station apparatus. The Random Access - Radio Network Temporary Identity (RA-RNTI) is an identifier which is used for random access, and is used for indicating a random access response. The Paging - Radio Network Temporary Identity (P-RNTI) is an identifier which is used for making a call to the mobile station apparatus (group) in an idle state. The System Information - Radio Network Temporary Identity (SI-RNTI) is an identifier which is used when the base station apparatus broadcasts the system information (contents of the Broadcast Control Channel (BCCH)) to the mobile station apparatus (group). The System information Change - Radio Network Temporary Identity (SC-RNTI) is an identifier which is used when the base station apparatus broadcasts a change in the system information (the contents of the Broadcast Control Channel (BCCH)) to the mobile station apparatus (group).

Moreover, as shown in Figure 9, 0000 to a certain value (shown as "XXXX") in hexadecimal are reserved as the Random Access - Radio Network Temporary Identity (RA-RNTI), XXXX+1 to FFF2 in hexadecimal are reserved as the Cell - Radio Network Temporary Identity (C-RNTI), FFFD in hexadecimal is reserved as the Paging - Radio Network Temporary Identity (P-RNTI), FFFE in hexadecimal is reserved as the System Information - Radio Network Temporary Identity (SI-RNTI), and FFFF in hexadecimal is reserved as the System information Change - Radio Network Temporary Identity (SC-RNTI). Moreover, FFF3 to FFFA in hexadecimal are reserved as the MBMS group ID (MBMS-RNTI) used in the present embodiment, and FFFC in hexadecimal is reserved as the Multicast Control Channel identifier (MCCH-RNTI). It should be noted that FFFB in hexadecimal, which is not used for any of the above, is shown in a state of being kept as a Reserved region. Here, the Reserved (region) indicates a region which is not used and is kept in consideration of future use.

Here, the Multicast Control Channel identifier (MCCH-RNTI) and the MBMS group ID (MBMS-RNTI) are identifiers used in the present embodiment, and as described above, the Multicast Control Channel identifier (MCCH-RNTI) is an identifier which is used when the base station apparatus broadcasts the Multicast Control Channel (MCCH) to the mobile station apparatus (group) which is interested in the MBMS service. Moreover, the MBMS group ID (MBMS-RNTI) is an identifier which is used for identifying the mobile station apparatus group or designating the resource for the MBMS service (indicating a position of the Physical Downlink Shared Channel (PDSCH) including the MBMS service) when the MBMS service is transmitted. In the first mapping method shown in Figure 9, the MBMS group ID (MBMS-RNTI) is an identifier which is fixedly reserved by a specification, and is caused to correspond to the MBMS short transmission ID. In other words, the mobile station apparatus retains mapping of the MBMS group ID (MBMS-RNTI) which has been previously caused to correspond to the MBMS short transmission ID.

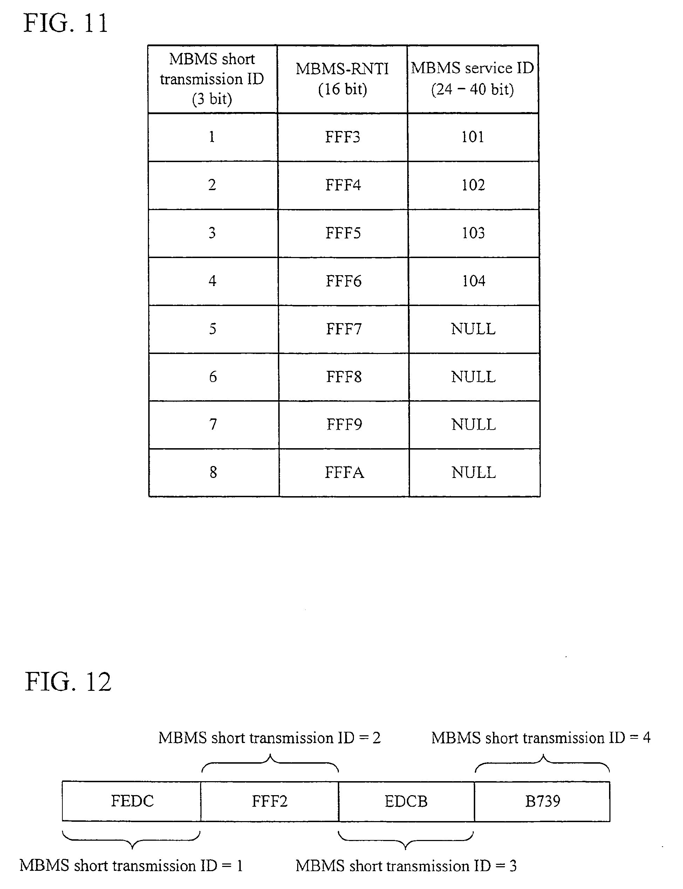

In other words, the same number of the MBMS group IDs (MBMS-RNTIs) and the MBMS short transmission IDs, as the number of MBMS services which can be provided within the SCPTM cell, are secured, and the MBMS group ID (MBMS-RNTI), the MBMS short transmission ID and the MBMS service ID one-to-one correspond to one another. For example, as shown in Figure 11, if four kinds of MBMS services (of the MBMS service IDs 101 to 104) are provided within the SCPTM cell, eight MBMS group IDs (MBMS-RNTIs) and 3-bit MBMS short transmission IDs are secured. In addition, Figure 11 shows that the MBMS short transmission ID corresponding to the MBMS service ID 101 is No. 1, and furthermore, the MBMS group ID (MBMS-RNTI) corresponding to the MBMS short transmission ID No. 1 is FFF3 in hexadecimal. Similarly, the MBMS service ID corresponding to the MBMS short transmission ID No. 2 is 102, and the corresponding MBMS group ID (MBMS-RNTI) is FFF4 in hexadecimal. The MBMS service ID corresponding to the MBMS short transmission ID No. 3 is 103, and the corresponding MBMS group ID (MBMS-RNTI) is FFF5 in hexadecimal. The MBMS service ID corresponding to the MBMS short transmission ID No. 4 is 104, and the corresponding MBMS group ID (MBMS-RNTI) is FFF6 in hexadecimal. Moreover, while the MBMS service IDs corresponding to the MBMS short transmission ID No. 5 to 8 are not assigned (are NULL), FFF7 to FFFA in hexadecimal are assigned as the corresponding MBMS group IDs (MBMS-RNTIs), respectively. This is because, unlike a second mapping method and a third mapping method to be described later, the assignment of the MBMS group IDs (MBMS-RNTIs) has been fixedly reserved by the specification, and the assignment is not performed when the provision of the MBMS service is started. The MBMS group ID (MBMS-RNTI) has also been assigned to the MBMS service which has not yet been provided.

As described above, in the first mapping method, since the MBMS group ID (MBMS-RNTI) has been fixedly reserved by the specification, an amount of information transmitted to the mobile station apparatus by the base station apparatus is smaller in comparison with the second mapping method and the third mapping method to be described later.

Another method is a method of broadcasting the MBMS group ID (MBMS-RNTI) corresponding to the MBMS short transmission ID (the second mapping method). In this case, in the MBMS-related information, the base station apparatus transmits the mapping information between the MBMS short transmission ID and the MBMS service ID, and further transmits the mapping information between the MBMS short transmission ID and the MBMS group ID (MBMS-RNTI), to the mobile station apparatus. The mapping information between the MBMS short transmission ID and the MBMS service ID is transmitted, for example, in a transmission scheme shown in Figure 8 or 7, which is used in the first mapping method.

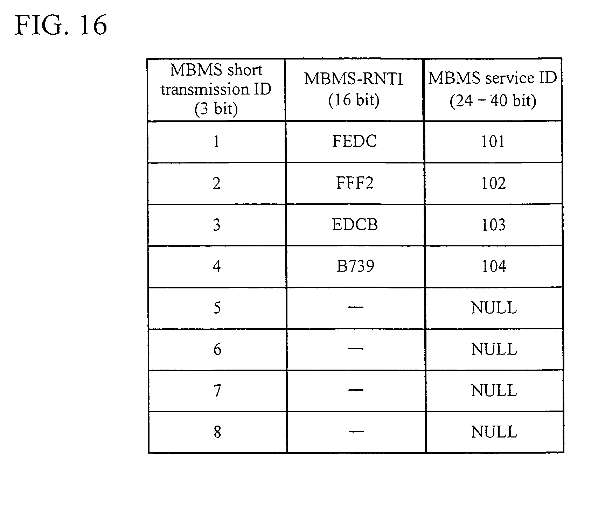

Next, in the second mapping method, the same number of the MBMS group IDs (MBMS-RNTIs) as the number of MBMS services which are currently being provided are secured, and the same number of the MBMS short transmission IDs as the number of MBMS services which can be provided within the SCPTM cell are secured. The MBMS group ID (MBMS-RNTI), the MBMS short transmission ID and the MBMS service ID one-to-one correspond to one another. For example, as shown in Figure 16, if four kinds of MBMS services (of the MBMS service IDs 101 to 104) are provided within the SCPTM cell, four MBMS group IDs (MBMS-RNTIs) and 3-bit MBMS short transmission IDs are secured. In addition, Figure 16 shows that the MBMS short transmission ID corresponding to the MBMS service ID 101 is No. 1, and furthermore, the MBMS group ID (MBMS-RNTI) corresponding to the MBMS short transmission ID No. 1 is FEDC in hexadecimal. Similarly, the MBMS service ID corresponding to the MBMS short transmission ID No. 2 is 102, and the corresponding MBMS group ID (MBMS-RNTI) is FFF2 in hexadecimal. The MBMS service ID corresponding to the MBMS short transmission ID No. 3 is 103, and the corresponding MBMS group ID (MBMS-RNTI) is EDCB in hexadecimal. Moreover, the MBMS service ID corresponding to the MBMS short transmission ID No. 4 is 104, and the corresponding MBMS group ID (MBMS-RNTI) is B739 in hexadecimal. The MBMS service IDs corresponding to the MBMS short transmission ID No. 5 to 8 are not assigned (are NULL), and the corresponding MBMS group IDs (MBMS-RNTIs) are not assigned either. This is because, in the second mapping method, the assignment of the MBMS group IDs (MBMS-RNTIs) is performed when the provision of the MBMS service is started. The MBMS group ID (MBMS-RNTI) has not been assigned to the MBMS service which has not yet been provided.

In addition, the mapping information between the MBMS short transmission ID and the MBMS group ID (MBMS-RNTI) is transmitted, for example, in a transmission scheme shown in Figure 12. Figure 12 shows that the MBMS group ID (MBMS-RNTI) corresponding to the MBMS short transmission ID No. 1 is FEDC in hexadecimal. It should be noted that information shown in Figure 12 is information which has been extracted from Figure 16.

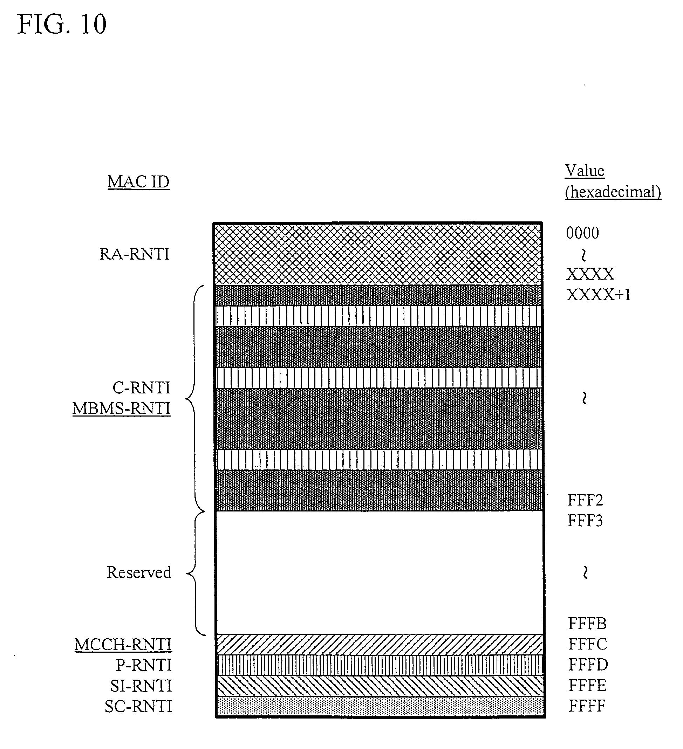

Figure 10 is a conceptual diagram representing the space of the identification information group (MAC ID) which is mapped to the Physical Downlink Control Channel (PDCCH) in the second mapping method. As shown in Figure 10, the radio resource control unit 109 (including the MBMS control unit 110) in the base station apparatus manages the identification information group (MAC ID) by use, such as the Cell - Radio Network Temporary Identity (C-RNTI), the Random Access - Radio Network Temporary Identity (RA-RNTI), the Paging - Radio Network Temporary Identity (P-RNTI), the System Information - Radio Network Temporary Identity (SI-RNTI), the System information Change - Radio Network Temporary Identity (SC-RNTI), the Multicast Control Channel identifier (MCCH-RNTI), and the MBMS group ID (MBMS-RNTI), and simultaneously manages which mobile station (group) has been assigned with the identification information group (MAC ID).

Moreover, as shown in Figure 10, 0000 to a certain value (shown as "XXXX") in hexadecimal are reserved as the Random Access - Radio Network Temporary Identity (RA-RNTI), XXXX+1 to FFF2 in hexadecimal are reserved as the Cell - Radio Network Temporary Identity (C-RNTI), FFFD in hexadecimal is reserved as the Paging - Radio Network Temporary Identity (P-RNTI), FFFE in hexadecimal is reserved as the System Information - Radio Network Temporary Identity (SI-RUTTI), and FFFF in hexadecimal is reserved as the System information Change - Radio Network Temporary Identity (SC-RNTI).

Moreover, a part of a region of the Cell - Radio Network Temporary Identity (C-RNTI) is used as the MBMS group ID (MBMS-RNTI) used in the present embodiment. FFFC in hexadecimal is reserved as the Multicast Control Channel identifier (MCCH-RNTI). It should be noted that FFF3 to FFFB in hexadecimal, which are not used for any of the above, are shown in a state of being kept as a Reserved region.

In this way, in the second mapping method, the MBMS group ID (MBMS-RNTI) is not fixedly assigned by the specification as in the first mapping method, and can be freely selected from the region of the Cell - Radio Network Temporary Identity (C-RNTI). Moreover, if the second mapping method is used, after a certain time has elapsed, if a value (FEDC, FFF2, EDCB, B739) assigned as the MBMS group ID (MBMS-RNTI) is assigned as the Cell - Radio Network Temporary Identity (C-RNTI), a value which is not used within the Cell - Radio Network Temporary Identity (C-RNTI) can be assigned as the MBMS group ID (MBMS-RNTI).

Another method (the third mapping method) is a method of broadcasting information from which the MBMS group ID (MBMS-RNTI) corresponding to the MBMS short transmission ID can be specified. In this case, in the MBMS-related information, the base station apparatus transmits mapping information between the MBMS short transmission ID and the MBMS service ID, and further transmits mapping information between the MBMS short transmission ID and the flexible ID, as well as the base ID, to the mobile station apparatus. The mapping information between the MBMS short transmission ID and the MBMS service ID is transmitted, for example, in the transmission scheme shown in Figure 8 or 7, which is used in the first mapping method.

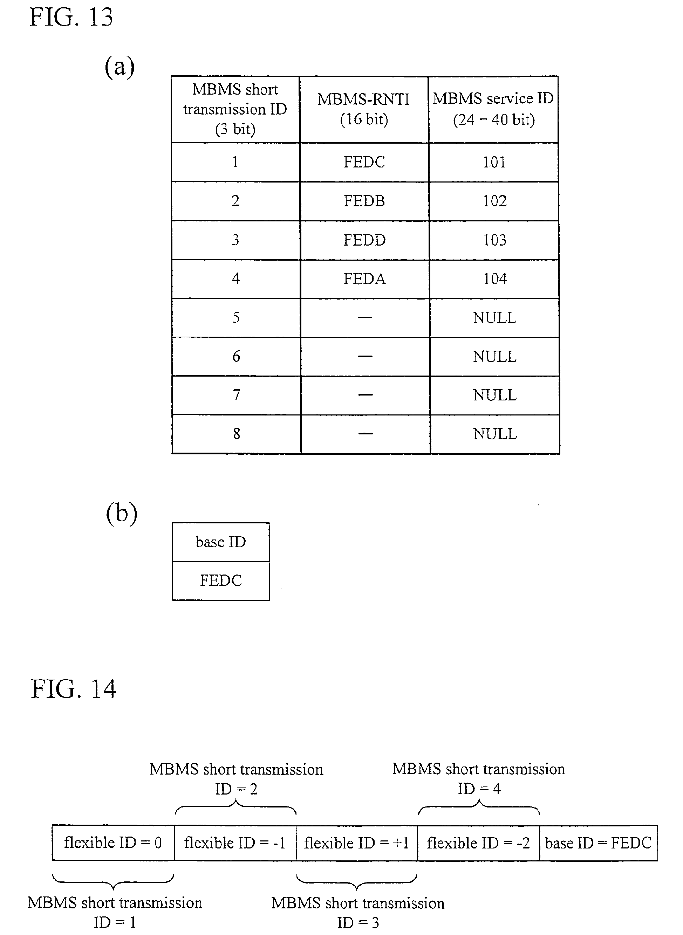

Moreover, similarly to the second mapping method, also in the third mapping method, the same number of the MBMS group IDs (MBMS-RNTIs) as the number of MBMS services which are currently being provided are secured, and the same number of the MBMS short transmission IDs as the number of MBMS services which can be provided within the SCPTM cell are secured. The MBMS group ID (MBMS-RNTI), the MBMS short transmission ID and the MBMS service ID one-to-one correspond to one another. For example, as shown in Figure 13(a), if four kinds of MBMS services (of the MBMS service IDs 101 to 104) are provided within the SCPTM cell, four MBMS group IDs (MBMS-RNTIs) and (eight) 3-bit MBMS short transmission IDs are secured. In addition, Figure 13(a) shows that the MBMS short transmission ID corresponding to the MBMS service ID 101 is No. 1, and furthermore, the MBMS group ID (MBMS-RNTI) corresponding to the MBMS short transmission ID No. 1 is FEDC in hexadecimal. Similarly, the MBMS service ID corresponding to the MBMS short transmission ID No. 2 is 102, and the corresponding MBMS group ID (MBMS-RNTI) is FEDB in hexadecimal. The MBMS service ID corresponding to the MBMS short transmission ID No. 3 is 103, and the corresponding MBMS group ID (MBMS-RNTI) is FEDD in hexadecimal. Moreover, the MBMS service ID corresponding to the MBMS short transmission ID No. 4 is 104, and the corresponding MBMS group ID (MBMS-RNTI) is FEDA in hexadecimal. The MBMS service IDs corresponding to the MBMS short transmission ID No. 5 to 8 are not assigned (are NULL), and the corresponding MBMS group IDs (MBMS-RNTIs) are not assigned either. This is because, similarly to the second mapping method, the assignment of the MBMS group IDs (MBMS-RNTIs) is performed when the provision of the MBMS service is started. The MBMS group ID (MBMS-RNTI) has not been assigned to the MBMS service which has not yet been provided.

It should be noted that, in the third mapping method, similarly to the second mapping method, in order to increase flexibility of the MBMS group ID (MBMS-RNTI) in comparison with the first mapping method, the MBMS group ID (MBMS-RNTI) is generated by addition of the base ID and the flexible ID. Here, the base ID is a 16-bit identifier which is a basis for calculating the MBMS group ID (MBMS-RNTI). Moreover, the flexible ID is an identifier used for increasing the flexibility of the MBMS group ID (MBMS-RNTI), and is a 4-bit identifier which can take a positive or negative value. It should be noted that a length of the flexible ID may be any length other than 4 bits. Moreover, when a scheduling period (a period in which the information notified in the MBMS-related information is valid) has elapsed, the value of the flexible ID can be changed.

It should be noted that Figure 13(b) shows a case where FEDC (in hexadecimal notation) has been set as the base ID. Moreover, the flexible ID is a difference from the MBMS group ID (MBMS-RNTI). Moreover, as the conceptual diagram representing the space of the identification information group (MAC ID) which is mapped to the Physical Downlink Control Channel (PDCCH), Figure 10 is used similarly to the second mapping method.

It should be noted that the mapping information between the MBMS short transmission ID and the flexible ID, as well as the base ID, are transmitted, for example, in a transmission scheme shown in Figure 14. Figure 14 shows that the base ID is FEDC (in hexadecimal notation), the flexible ID corresponding to the MBMS short transmission ID No. 1 is 0, the flexible ID corresponding to the MBMS short transmission ID No. 2 is -1, the flexible ID corresponding to the MBMS short transmission ID No. 3 is +1, and the flexible ID corresponding to the MBMS short transmission ID No. 4 is -2.

The mobile station apparatus 200, which has received this, performs the addition of the base ID and the flexible ID corresponding to each MBMS short transmission ID, in order to calculate the MBMS group ID (MBMS-RNTI) corresponding to each MBMS short transmission ID. In other words, the MBMS group ID (MBMS-RNTI) corresponding to the MBMS short transmission ID No. 1 is calculated as FEDC in hexadecimal, the MBMS group ID (MBMS-RNTI) corresponding to the MBMS short transmission ID No. 2 is calculated as FEDB in hexadecimal, the MBMS group ID (MBMS-RNTI) corresponding to the MBMS short transmission ID No. 3 is calculated as FEDD in hexadecimal, and the MBMS group ID (MBMS-RNTI) corresponding to the MBMS short transmission ID No. 4 is calculated as FEDA in hexadecimal.

In this way, since a value obtained by the addition of the base ID and the flexible ID is set as the MBMS group ID (MBMS-RNTI), and is applied to a space of the Cell - Radio Network Temporary Identity (C-RNTI) (also including a case where the space is disconnectedly open), the flexibility of the MBMS group ID (MBMS-RNTI) can be increased more than the first mapping method in which the MBMS group ID (MBMS-RNTI) is fixedly reserved by the specification. Furthermore, in the second mapping method, the MBMS group IDs (MBMS-RNTIs) are broadcasted for all the MBMS services which are currently being provided. However, in the third mapping method, only one 16-bit base ID and the same number of the 4-bit flexible IDs as the number of MBMS services which are currently being provided need to be broadcasted, and thus the information amount can be reduced. For example, while 64-bit (four pieces of 16-bit) information is broadcasted to the mobile station apparatus in Figure 12 using the second mapping method, 32-bit (the base ID: 16 bits and four 4-bit flexible IDs) information is broadcasted in Figure 14 using the third mapping method, and thus the information amount is reduced.

Moreover, another method (a fourth mapping method) is a method in which the base station apparatus transmits the base ID used in the third mapping method, and thereby, the MBMS group ID (MBMS-RNTI) corresponding to the MBMS short transmission ID is specified.

In this case, in the MBMS-related information, the base station apparatus transmits the mapping information between MBMS short transmission ID and the MBMS service ID, and further transmits the base ID, to the mobile station apparatus. The mapping information between the MBMS short transmission ID and the MBMS service ID is transmitted, for example, in the transmission scheme shown in Figure 8 or 7, which is used in the first mapping method.

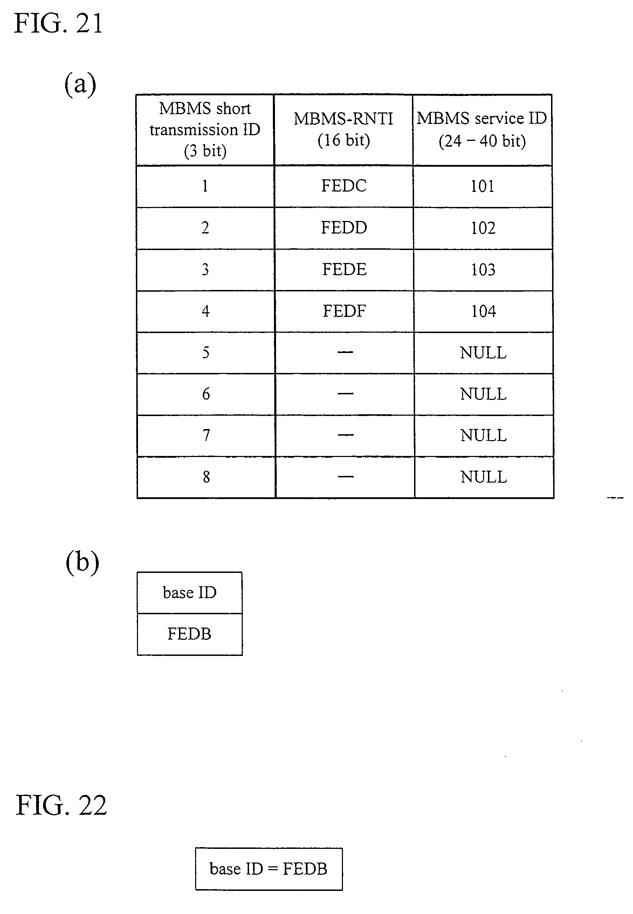

Moreover, similarly to the second and third mapping methods, also in the fourth mapping method, the same number of the MBMS group IDs (MBMS-RNTIs) as the number of MBMS services which are currently being provided are secured, and the same number of the MBMS short transmission IDs as the number of MBMS services which can be provided within the SCPTM cell are secured. The MBMS group ID (MBMS-RNTI), the MBMS short transmission ID and the MBMS service ID one-to-one correspond to one another. For example, as shown in Figure 21 (a), if four kinds of MBMS services (of the MBMS service IDs 101 to 104) are provided within the SCPTM cell, four MBMS group IDs (MBMS-RNTIs) and (eight) 3-bit MBMS short transmission IDs are secured. In addition, Figure 21 (a) shows that the MBMS short transmission ID corresponding to the MBMS service ID 101 is No. 1, and furthermore, the MBMS group ID (MBMS-RNTI) corresponding to the MBMS short transmission ID No. 1 is FEDC in hexadecimal. Similarly, the MBMS service ID corresponding to the MBMS short transmission ID No. 2 is 102, and the corresponding MBMS group ID (MBMS-RNTI) is FEDD in hexadecimal. The MBMS service ID corresponding to the MBMS short transmission ID No. 3 is 103, and the corresponding MBMS group ID (MBMS-RNTI) is FEDE in hexadecimal. Moreover, the MBMS service ID corresponding to the MBMS short transmission ID No. 4 is 104, and the corresponding MBMS group ID (MBMS-RNTI) is FEDF in hexadecimal. The MBMS service IDs corresponding to the MBMS short transmission ID No. 5 to 8 are not assigned (are NULL), and the corresponding MBMS group IDs (MBMS-RNTIs) are not assigned either. This is because, similarly to the second and third mapping methods, the assignment of the MBMS group IDs (MBMS-RNTIs) is performed when the provision of the MBMS service is started. The MBMS group ID (MBMS-RNTI) has not been assigned to the MBMS service which has not yet been provided.

It should be noted that, in the fourth mapping method, similarly to the second and third mapping methods, in order to increase the flexibility of the MBMS group ID (MBMS-RNTI) in comparison with the first mapping method, the MBMS group ID (MBMS-RNTI) is generated based on the base ID. Here, the base ID is the 16-bit identifier which is the basis for calculating the MBMS group ID (MBMS-RNTI). Moreover, the flexible ID used in the third mapping method can be set to a fixed value for the MBMS short transmission ID, and for example, the flexible ID can be set to a value common to the MBMS short transmission ID.

It should be noted that Figure 21 (b) is a diagram showing a case where FEDB (in hexadecimal notation) has been set as the base ID. Moreover, as the conceptual diagram representing the space of the identification information group (MAC ID) which is mapped to the Physical Downlink Control Channel (PDCCH), Figure 10 is used similarly to the second and third mapping methods.

It should be noted that the base ID is transmitted, for example, in a transmission scheme shown in Figure 22. Figure 22 shows that FEDB (in hexadecimal notation) is transmitted as the base ID.

The mobile station apparatus 200, which has received this, performs the addition of the base ID and each MBMS short transmission ID (the addition of the base ID and the fixed value which is caused to correspond to each MBMS short transmission ID), in order to calculate the MBMS group ID (MBMS-RNTI) corresponding to each MBMS short transmission ID. In other words, the MBMS group ID (MBMS-RNTI) corresponding to the MBMS short transmission ID No. 1 is calculated as FEDC in hexadecimal, the MBMS group ID (MBMS-RNTI) corresponding to the MBMS short transmission ID No. 2 is calculated as FEDD in hexadecimal, the MBMS group ID (MBMS-RNTI) corresponding to the MBMS short transmission ID No. 3 is calculated as FEDE in hexadecimal, and the MBMS group ID (MBMS-RNTI) corresponding to the MBMS short transmission ID No. 4 is calculated as FEDF in hexadecimal.

In this way, since a value obtained by the addition of the base ID and the MBMS short transmission ID is set as the MBMS group ID (MBMS-RNTI), and is applied to the space of the Cell - Radio Network Temporary Identity (C-RNTI), the flexibility of the MBMS group ID (MBMS-RNTI) can be increased more than the first mapping method in which the MBMS group ID (MBMS-RNTI) is fixedly reserved by the specification. Furthermore, in the second mapping method, the MBMS group IDs (MBMS-RNTIs) are broadcasted for all the MBMS services which are currently being provided. However, in the fourth mapping method, only one 16-bit base ID needs to be broadcasted, and thus the information amount can be reduced. For example, in Figure 12 using the second mapping method, 64-bit (four pieces of 16-bit) information is broadcasted to the mobile station apparatus. In Figure 14 using the third mapping method, 32-bit (the base ID: 16 bits and four 4-bit flexible IDs) information is broadcasted. Furthermore, in Figure 21 using the fourth mapping method, only 16-bit (the base ID: 16 bits) information is broadcasted, and thus the information amount is further reduced than the case where the second and third mapping methods are used.

### <MBMS Service (MBMS Transmission Data) Transmission Procedure in SCPTM Cell>

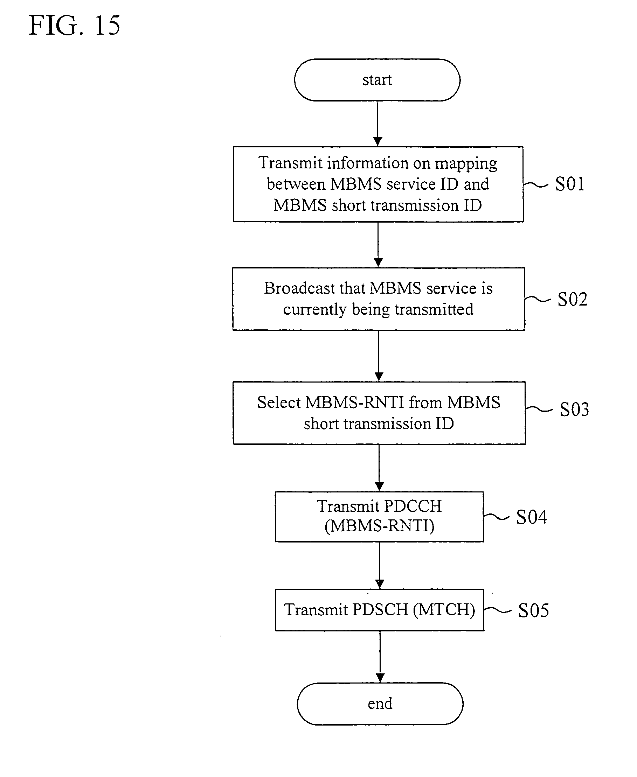

Figure 15 is a flowchart diagram showing a transmission procedure in the base station apparatus 100 (the radio resource control unit 109 ((including the MBMS control unit 110))) included in the SCPTM cell. This process procedure is started if the base station apparatus 100 starts the transmission of the MBMS service, or if the MBMS service start request message including the MBMS short transmission ID is received from the mobile station apparatus 200 (start).

In the SCPTM cell, when the MBMS service (MBMS transmission data) is transmitted, the base station apparatus 100 transmits the Broadcast Control Channel (BCCH), the Multicast Control Channel (MCCH) and the Multicast Traffic Channel (MTCH), in order thereof.

As shown in Figure 3, the base station apparatus 100 included in the SCPTM cell maps the Broadcast Control Channel (BCCH) to a Physical Downlink Broadcast Channel (PBCH) and the Physical Downlink Shared Channel (PDSCH), and transmits the Physical Downlink Broadcast Channel (PBCH) and the Physical Downlink Shared Channel (PDSCH). Then, the base station apparatus 100 maps the Multicast Control Channel (MCCH) to the Physical Downlink Shared Channel (PDSCH) and transmits the Physical Downlink Shared Channel (PDSCH), and simultaneously transmits the Physical Downlink Control Channel (PDCCH) to which the Multicast Control Channel identifier (MCCH-RNTI) has been mapped. The Multicast Control Channel (MCCH) is a channel which is received by all the mobile station apparatuses (including the mobile station apparatus 200) that are receiving (or hope to receive) the MBMS service. Moreover, the Multicast Control Channel identifier (MCCH-RNTI) is a value which is not changed for each MBMS service as shown in Figure 9 or 10, and is described as a fixed value within the SCPTM cell (or in the specification). However, the Multicast Control Channel identifier (MCCH-RNTI) may be changed for each MBMS service.

At this time, the base station apparatus 100 transmits the mapping information between the MBMS short transmission ID and the MBMS service ID, for the MBMS service which is currently being provided in the SCPTM cell, in the MBMS-related information included in the Broadcast Control Channel (BCCH) and/or the Multicast Control Channel (MCCH) (Figure 15 - step S01). In the present embodiment, it is assumed that the number of MBMS services which can be provided in the SCPTM cell is eight, and currently, four MBMS services are being provided. In addition, in the MBMS-related information, the base station apparatus 100 broadcasts information indicating whether or not the Multicast Traffic Channel (MTCH) including the MBMS service corresponding to each MBMS short transmission ID or each MBMS service ID is being transmitted (Figure 15 - S02). This is transmitted, for example, as the transmission flag (flag).

While this situation will be described by using Figure 7, there is a similar meaning also if Figure 8 is used to perform the transmission. As described above, in Figure 7, since the MBMS service ID corresponding to the MBMS short transmission ID 1 is 101, and the transmission flag (flag) is 1, it is indicated that this MBMS service is currently being provided. Since the MBMS service ID corresponding to the MBMS short transmission ID 2 is 102, and the transmission flag (flag) is 1, it is indicated that this MBMS service is currently being provided. Since the MBMS service ID corresponding to the MBMS short transmission ID 3 is 103, and the transmission flag (flag) is 0, it is indicated that this MBMS service can be provided while this MBMS service is currently not being transmitted. Since the MBMS service ID corresponding to the MBMS short transmission ID 4 is 104, and the transmission flag (flag) is 1, it is indicated that this MBMS service is currently being provided. Moreover, since the MBMS service IDs corresponding to the MBMS short transmission IDs 5 to 8 are NULL, and the transmission flags (flags) are 0, it is indicated that four more MBMS services other than the above four MBMS services can be provided. In other words, since this mapping information is transmitted for all the MBMS services which can be provided in the SCPTM cell, the maximum value of the MBMS short transmission ID also represents a total number of all the MBMS services which can be provided in the SCPTM cell, and means that the base station apparatus 100 can provide eight MBMS services, in the present embodiment.

Moreover, the mobile station apparatus can judge whether or not the MBMS service desired to be received is currently being transmitted, by receiving the transmission flag (flag) as shown in Figures 7 and 8. In Figures 7 and 8, while this transmission flag (flag) is transmitted as the same message as the mapping information, this transmission flag (flag) may be transmitted as another message.

It should be noted that if the MBMS service start request message is received from the mobile station apparatus 200, the base station apparatus 100 calculates the MBMS service ID corresponding to the MBMS short transmission ID included in the MBMS service start request message, and starts the transmission of the corresponding MBMS service.

Then, the base station apparatus 100 selects the MBMS group ID (MBMS-RNTI) to be caused to correspond to the MBMS short transmission ID (Figure 15 - S03).

For example, if the first mapping method is used, as shown in Figure 11, it is shown that the MBMS short transmission ID corresponding to the MBMS service ID 101 is No. 1, and furthermore, the MBMS group ID (MBMS-RNTI) corresponding to the MBMS short transmission ID No. 1 is FFF3 in hexadecimal. Similarly, the MBMS service ID corresponding to the MBMS short transmission ID No. 2 is 102, and the corresponding MBMS group ID (MBMS-RNTI) is FFF4 in hexadecimal. The MBMS service ID corresponding to the MBMS short transmission ID No. 3 is 103, and the corresponding MBMS group ID (MBMS-RNTI) is FFF5 in hexadecimal. The MBMS service ID corresponding to the MBMS short transmission ID No. 4 is 104, and the corresponding MBMS group ID (MBMS-RNTI) is FFF6 in hexadecimal. Moreover, while the MBMS service IDs corresponding to the MBMS short transmission ID No. 5 to 8 are not assigned (are NULL), FFF7 to FFFA in hexadecimal are assigned as the corresponding MBMS group IDs (MBMS-RNTIs), respectively.

Moreover, for example, if the second mapping method is used, the base station apparatus 100 further transmits the mapping information between the MBMS short transmission ID and the MBMS group ID (MBMS-RNTI), in the MBMS-related information included in the Broadcast Control Channel (BCCH) and/or the Multicast Control Channel (MCCH).

As shown in Figure 16, each MBMS group ID (MBMS-RNTI) which has been selected from the region of the C-RNTI is broadcasted as MBMS group ID (MBMS-RNTI) corresponding to the MBMS short transmission ID. Figure 16 shows that the MBMS short transmission ID corresponding to the MBMS service ID 101 is No. 1, and furthermore, the MBMS group ID (MBMS-RNTI) corresponding to the MBMS short transmission ID No. 1 is FEDC in hexadecimal. Similarly, the MBMS service ID corresponding to the MBMS short transmission ID No. 2 is 102, and the corresponding MBMS group ID (MBMS-RNTI) is FFF2 in hexadecimal. The MBMS service ID corresponding to the MBMS short transmission ID No. 3 is 103, and the corresponding MBMS group ID (MBMS-RNTI) is EDCB in hexadecimal. Moreover, the MBMS service ID corresponding to the MBMS short transmission ID No. 4 is 104, and the corresponding MBMS group ID (MBMS-RNTI) is B739 in hexadecimal. The MBMS service IDs corresponding to the MBMS short transmission ID No. 5 to 8 are not assigned (are NULL), and the corresponding MBMS group IDs (MBMS-RiNTIs) are not assigned either.

On the other hand, if the base station apparatus 100 uses the third mapping method to transmit the MBMS service, the base station apparatus 100 further broadcasts the base ID and the flexible ID. As shown in Figure 13(b), here, it is assumed that the base ID is set as FEDC. At this time, as shown in Figure 14, the flexible ID corresponding to the MBMS short transmission ID 1 is broadcasted as 0, the flexible ID corresponding to the MBMS short transmission ID 2 is broadcasted as -1, the flexible ID corresponding to the MBMS short transmission ID 3 is broadcasted as +1, and the flexible ID corresponding to the MBMS short transmission ID 4 is broadcasted as -2. Simultaneously, the base station apparatus 100 manages correspondence between the MBMS short transmission ID and the MBMS group ID (MBMS-RNTI). In other words, the MBMS group ID (MBMS-RNTI) corresponding to the MBMS short transmission ID 1 is managed as FEDC (FEDC+0), the MBMS group ID (MBMS-RNTI) corresponding to the MBMS short transmission ID 2 is managed as FEDB (FEDC-1), the MBMS group ID (MBMS-RNTI) corresponding to the MBMS short transmission ID 3 is managed as FEDD (FEDC+1), the MBMS group ID (MBMS-RNTI) corresponding to the MBMS short transmission ID 4 is managed as FEDA (FEDC-2), and moreover, the MBMS group IDs (MBMS-RNTIs) corresponding to the MBMS short transmission IDs 5 to 8 are managed so that the MBMS group IDs (MBMS-RNTIs) have not been assigned.

On the other hand, if the base station apparatus 100 uses the fourth mapping method to transmit the MBMS service, the base station apparatus 100 further broadcasts the base ID. As shown in Figure 21 (b), here, it is assumed that the base ID is set as FEDB (in hexadecimal notation). Moreover, as described above, the flexible ID used in the third mapping method is set to the fixed value for the MBMS short transmission ID, and for example, the flexible ID is set to the value common to the MBMS short transmission ID and is managed. At this time, the fixed value corresponding to the MBMS short transmission ID 1 is 1.

Simultaneously, the base station apparatus 100 manages the correspondence between the MBMS short transmission ID and the MBMS group ID (MBMS-RNTI). In other words, the MBMS group ID (MBMS-RNTI) corresponding to the MBMS short transmission ID 1 is managed as FEDC (FEDB+1), the MBMS group ID (MBMS-RNTI) corresponding to the MBMS short transmission ID 2 is managed as FEDD (FEDB+2), the MBMS group ID (MBMS-RNTI) corresponding to the MBMS short transmission ID 3 is managed as FEDE (FEDB+3), the MBMS group ID (MBMS-RNTI) corresponding to the MBMS short transmission ID 4 is managed as FEDF (FEDB+4), the MBMS group ID (MBMS-RNTI) corresponding to the MBMS short transmission ID 5 is managed as FEE0 (FEDB+5), the MBMS group ID (MBMS-RNTI) corresponding to the MBMS short transmission ID 6 is managed as FEE1 (FEDB+6), the MBMS group ID (MBMS-RNTI) corresponding to the MBMS short transmission ID 7 is managed as FEE2 (FEDB+7), and the MBMS group ID (MBMS-RNTI) corresponding to the MBMS short transmission ID 8 is managed as FEE3 (FEDB+8).

Then, the base station apparatus 100 maps the MBMS group ID (MBMS-RNTI) corresponding to the MBMS service (or the MBMS short transmission ID) to be transmitted, to the Physical Downlink Control Channel (PDCCH), and transmits the Physical Downlink Control Channel (PDCCH) to the mobile station apparatus 200 (Figure 15 - S04), and also maps the Multicast Traffic Channel (MTCH) including the MBMS service, to the Physical Downlink Shared Channel (PDSCH), and transmits the Physical Downlink Shared Channel (PDSCH) (Figure 15 - S05). For example, if the MBMS service corresponding to the MBMS service ID 101 is transmitted, the base station apparatus 100 includes and transmits FFF3 in the case of the first mapping method, FEDC in the case of the second mapping method, or FEDC in the case of the mapping method 3, as the MBMS group ID (MBMS-RNTI), in the Physical Downlink Control Channel (PDCCH), and also includes and transmits the MBMS service in the Physical Downlink Shared Channel (PDSCH).

### <MBMS Service (MBMS Transmission Data) Reception Procedure in SCPTM Cell by Using First Mapping Method>

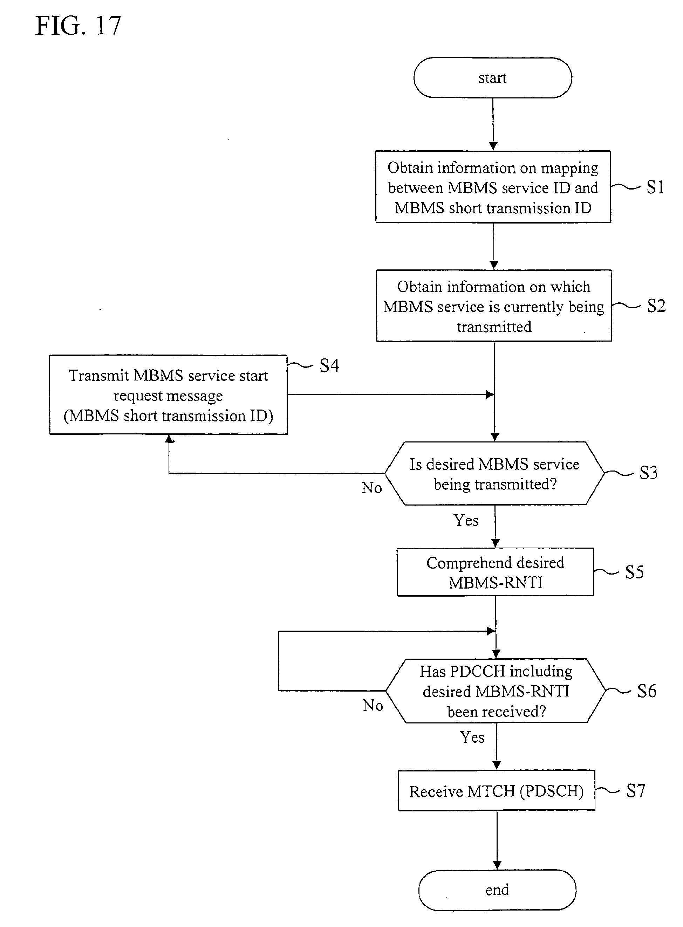

Next, a process procedure in the mobile station apparatus 200 (the radio resource control unit 209 (including the MBMS control unit 210)) when the MBMS service is received in the SCPTM cell is shown. The process procedure in the case where the first mapping method is used is shown in Figure 17. This process procedure is started if the mobile station apparatus 200 attempts to receive the MBMS service (start).

In the SCPTM cell, when the MBMS transmission data is received, the mobile station apparatus 200 receives the Broadcast Control Channel (BCCH), the Multicast Control Channel (MCCH), and the Multicast Traffic Channel (MTCH), in order thereof.

The mobile station apparatus 200 receives the MBMS-related information included in the Broadcast Control Channel (BCCH) and/or the Multicast Control Channel (MCCH) from the base station apparatus 100, obtains the mapping information between the MBMS service ID and the MBMS short transmission ID as shown in Figure 8 or 7, for all the MBMS services which can be provided in this SCPTM cell (Figure 17 - S1), further obtains information on which MBMS service is currently being transmitted (Figure 17 - S2), and thereby, comprehends the correspondence relationship between the MBMS service ID and the MBMS short transmission ID, and whether or not the MBMS service desired to be received is currently being transmitted (Figure 17 - S3).

If the MBMS service desired to be received is currently not being transmitted (No in Figure 17 - S3), the mobile station apparatus 200 transmits the MBMS service start request message including the MBMS short transmission ID to the base station apparatus 100 (Figure 17 - S4). For example, if the mobile station apparatus 200 hopes to receive the MBMS service of the MBMS service ID 1, the mobile station apparatus 200 transmits the MBMS service start request message including the MBMS short transmission ID 1 corresponding to the MBMS service ID 1, to the base station apparatus. In this way, in order to make an MBMS service start request, instead of transmitting the MBMS service ID of a large number of bits (24 to 40 bits), the MBMS short transmission ID of a fewer number of bits (3 bits) is transmitted, and thereby, consumption of the uplink resource is reduced.

Subsequently, if the MBMS service desired to be received is being transmitted (Yes in Figure 17 - S3), since the MBMS group ID (MBMS-RNTI) has been specified and is the fixed value as shown in Figure 11 in the first mapping method, the mobile station apparatus 200 knows the value of the MBMS group ID (MBMS-RNTI) corresponding to the MBMS short transmission ID. Thereby, the correspondence relationship between the MBMS service ID desired to be received and the MBMS group ID (MBMS-RNTI) is comprehended by the mobile station apparatus 200 (Figure 17 - S5). For example, the MBMS group ID (MBMS-RNTI) corresponding to the MBMS short transmission ID 101 corresponding to the MBMS service ID 1 is FFF3 (in hexadecimal notation).

Then, the mobile station apparatus 200 decodes the Physical Downlink Control Channel (PDCCH) for each downlink sub-frame, confirms whether or not the MBMS group ID (MBMS-RNTI) specified in the above step (Figure 17 - S5) is included in the Physical Downlink Control Channel (PDCCH), and thereby, confirms whether or not there is the MBMS service desired to be received (Figure 17 - S6). For example, if the mobile station apparatus 200 hopes to receive the MBMS service ID 101, since the corresponding MBMS group ID (MBMS-RNTI) is FFF3 (in hexadecimal notation), it is confirmed whether or not FFF3 is included in the Physical Downlink Control Channel (PDCCH) by the mobile station apparatus 200.

The mobile station apparatus 200 continuously decodes the Physical Downlink Control Channel (PDCCH) including the MBMS group ID (MBMS-RNTI) for each downlink sub-frame, and if the mobile station apparatus 200 detects the MBMS group ID (MBMS-RNTI) specified in the above step (Figure 17 - S5) in the Physical Downlink Control Channel (PDCCH) (Yes in Figure 17 - S6), the mobile station apparatus 200 receives the Physical Downlink Shared Channel (PDSCH) designated by the Physical Downlink Control Channel (PDCCH), receives the Multicast Traffic Channel (MTCH) (including the desired MBMS service) included in the Physical Downlink Shared Channel (PDSCH) (Figure 17 - S7), and terminates the process (end).

### <MBMS Service (MBMS Transmission Data) Reception Procedure in SCPTM Cell by Using Second Mapping Method>

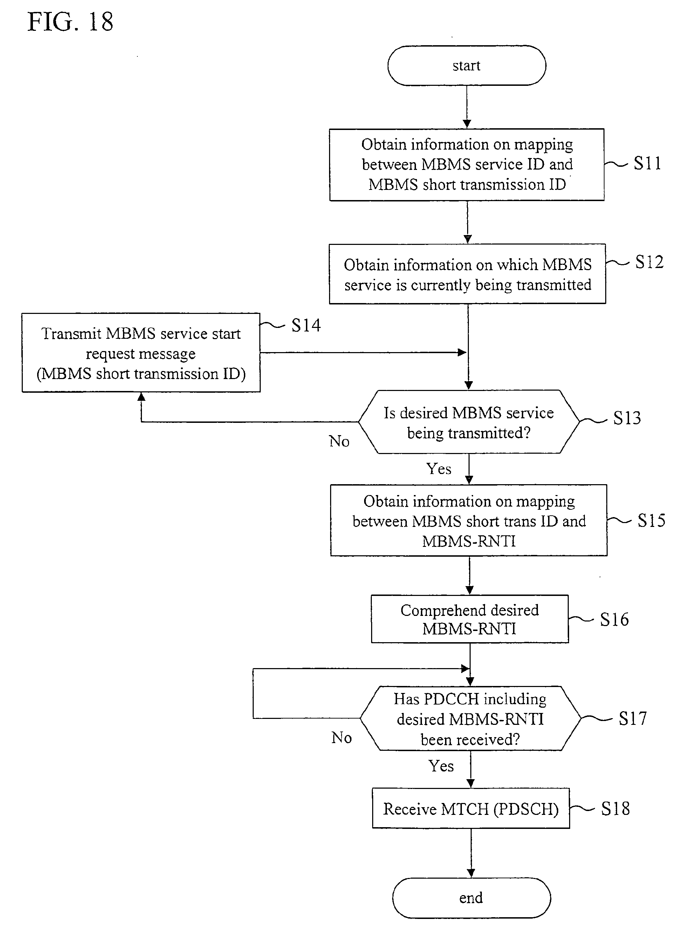

Next, a process procedure in the mobile station apparatus 200 (the radio resource control unit 209 (including the MBMS control unit 210)) when the MBMS service is received in the SCPTM cell by using the second mapping method is shown in Figure 18. This process procedure is started if the mobile station apparatus 200 attempts to receive the MBMS service (start).

In the SCPTM cell, when the MBMS transmission data is received, the mobile station apparatus 200 receives the Broadcast Control Channel (BCCH), the Multicast Control Channel (MCCH), and the Multicast Traffic Channel (MTCH), in order thereof.

The mobile station apparatus 200 receives the MBMS-related information included in the Broadcast Control Channel (BCCH) and/or the Multicast Control Channel (MCCH) from the base station apparatus 100, obtains the mapping information between the MBMS service ID and the MBMS short transmission ID as shown in Figure 8 or 7, for all the MBMS services which can be provided in this SCPTM cell (Figure 18 - S11), further obtains the information on which MBMS service is currently being transmitted (Figure 18 - S12), and thereby, examines the correspondence relationship between the MBMS service ID and the MBMS short transmission ID, and whether or not the MBMS service desired to be received is currently being transmitted (Figure 18 - S13).

If the MBMS service desired to be received is currently not being transmitted (No in Figure 18 - S13), the mobile station apparatus 200 transmits the MBMS service start request message including the MBMS short transmission ID to the base station apparatus 100 (Figure 18 - S14). For example, if the mobile station apparatus 200 hopes to receive the MBMS service of the MBMS service ID 1, the mobile station apparatus 200 transmits the MBMS service start request message including the MBMS short transmission ID 1 corresponding to the MBMS service ID 1, to the base station apparatus. In this way, in order to make the MBMS service start request, instead of transmitting the MBMS service ID of a large number of bits (24 to 40 bits), the MBMS short transmission ID of a fewer number of bits (3 bits) is transmitted, and thereby, the consumption of the uplink resource is reduced.

Subsequently, if the MBMS service desired to be received is being transmitted (Yes in Figure 18 - S13), the mobile station apparatus 200 obtains the mapping information between the MBMS short transmission ID and the MBMS group ID (MBMS-RNTI) as shown in Figure 12, from the MBMS-related information (Figure 18 - S15). Thereby, the correspondence relationship between the MBMS service ID desired to be received and the MBMS group ID (MBMS-RNTI) is comprehended by the mobile station apparatus 200 (Figure 18 - S16). For example, the MBMS group ID (MBMS-RNTI) corresponding to the MBMS short transmission ID 101 corresponding to the MBMS service ID 1 is FEDC (in hexadecimal notation).

Then, the mobile station apparatus 200 decodes the Physical Downlink Control Channel (PDCCH) for each downlink sub-frame, confirms whether or not the MBMS group ID (MBMS-RNTI) specified in the above step (Figure 18 - S16) is included in the Physical Downlink Control Channel (PDCCH), and thereby, confirms whether or not there is the MBMS service desired to be received (Figure 18 - S17). For example, as shown in Figure 16, if the mobile station apparatus 200 hopes to receive the MBMS service ID 101, since the corresponding MBMS group ID (MBMS-RNTI) is FEDC (in hexadecimal notation), it is confirmed whether or not FEDC is included in the Physical Downlink Control Channel (PDCCH) by the mobile station apparatus 200.

The mobile station apparatus 200 continuously decodes the Physical Downlink Control Channel (PDCCH) including the MBMS group ID (MBMS-RNTI) for each downlink sub-frame, and if the mobile station apparatus 200 detects the MBMS group ID (MBMS-RNTI) specified in the above step (Figure 18 - S16) in the Physical Downlink Control Channel (PDCCH) (Yes in Figure 18 - S17), the mobile station apparatus 200 receives the Physical Downlink Shared Channel (PDSCH) designated by the Physical Downlink Control Channel (PDCCH), receives the Multicast Traffic Channel (MTCH) (including the desired MBMS service) included in the Physical Downlink Shared Channel (PDSCH) (Figure 18 - S18), and terminates the process (end).

### <MBMS Service (MBMS Transmission Data) Reception Procedure in SCPTM Cell by Using Third Mapping Method>

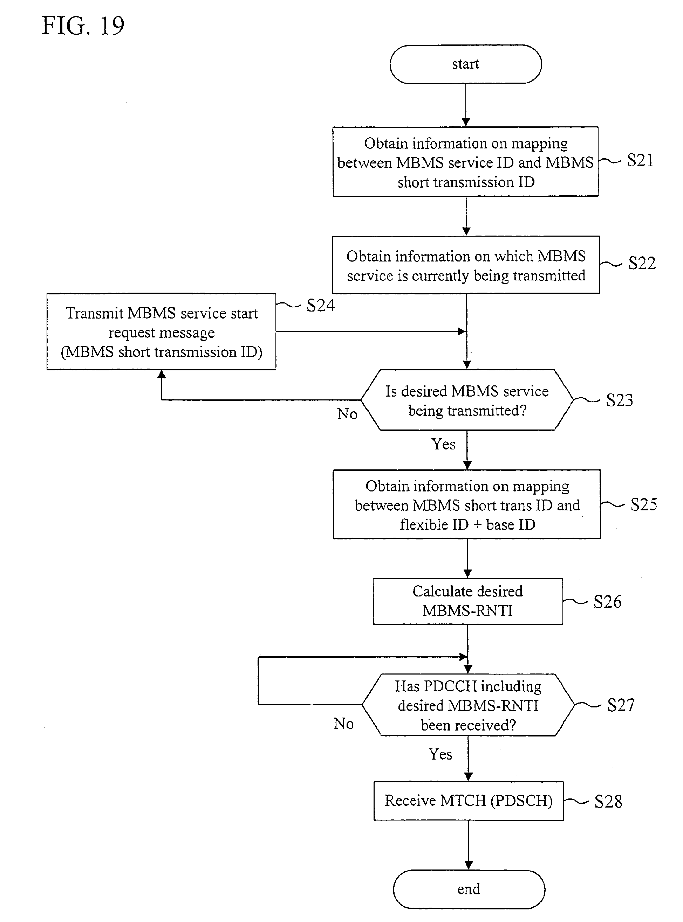

Next, a process procedure in the mobile station apparatus 200 (the radio resource control unit 209 (including the MBMS control unit 210)) when the MBMS service is received in the SCPTM cell by using the third mapping method is shown in Figure 19. This process procedure is started if the mobile station apparatus 200 attempts to receive the MBMS service (start).

In the SCPTM cell, when the MBMS transmission data is received, the mobile station apparatus 200 receives the Broadcast Control Channel (BCCH), the Multicast Control Channel (MCCH), and the Multicast Traffic Channel (MTCH), in order thereof.

The mobile station apparatus 200 receives the MBMS-related information included in the Broadcast Control Channel (BCCH) and/or the Multicast Control Channel (MCCH) from the base station apparatus 100, obtains the mapping information between the MBMS service ID and the MBMS short transmission ID as shown in Figure 8 or 7, for all the MBMS services which can be provided in this SCPTM cell (Figure 19 - S21), further obtains the information on which MBMS service is currently being transmitted (Figure 19 - S22), and thereby, comprehends the correspondence relationship between the MBMS service ID and the MBMS short transmission ID, and whether or not the MBMS service desired to be received is being transmitted (Figure 19 - S23).

If the MBMS service desired to be received is currently not being transmitted (No in Figure 19 - S23), the mobile station apparatus 200 transmits the MBMS service start request message including the MBMS short transmission ID to the base station apparatus 100 (Figure 19 - S24). For example, if the mobile station apparatus 200 hopes to receive the MBMS service of the MBMS service ID 1, the mobile station apparatus 200 transmits the MBMS service start request message including the MBMS short transmission ID 1 corresponding to the MBMS service ID 1, to the base station apparatus. In this way, in order to make the MBMS service start request, instead of transmitting the MBMS service ID of a large number of bits (24 to 40 bits), the MBMS short transmission ID of a fewer number of bits (3 bits) is transmitted, and thereby, the consumption of the uplink resource is reduced.

Subsequently, if the MBMS service desired to be received is being transmitted (Yes in Figure 19 - S23), the mobile station apparatus 200 obtains the mapping information between the MBMS short transmission ID and the flexible ID, as well as the base ID, as shown in Figure 14, from the MBMS-related information (Figure 19 - S25). Then, the mobile station apparatus 200 calculates the MBMS group ID (MBMS-RNTI) by the addition of the base ID and the flexible ID (Figure 19 - S26). In other words, the MBMS group ID (MBMS-RNTI) corresponding to the MBMS short transmission ID 1 is calculated as FEDC (in hexadecimal notation), the MBMS group ID (MBMS-RNTI) corresponding to the MBMS short transmission ID 2 is calculated as FEDB, the MBMS group ID (MBMS-RNTI) corresponding to the MBMS short transmission ID 3 is calculated as FEDD, and the MBMS group ID (MBMS-RNTI) corresponding to the MBMS short transmission ID 4 is calculated as FEDA. Thereby, the correspondence relationship between the MBMS service ID desired to be received and the MBMS group ID (MBMS-RNTI) is comprehended by the mobile station apparatus 200.

Then, the mobile station apparatus 200 decodes the Physical Downlink Control Channel (PDCCH) for each downlink sub-frame, confirms whether or not the MBMS group ID (MBMS-RNTI) specified in the above step (Figure 19 - S26) is included in the Physical Downlink Control Channel (PDCCH), and thereby, confirms whether or not there is the MBMS service desired to be received (Figure 19 - S27). For example, if the mobile station apparatus 200 hopes to receive the MBMS service ID 101, since the corresponding MBMS group ID (MBMS-RNTI) is FFF3 (in hexadecimal notation), it is confirmed whether or not FFF3 is included in the Physical Downlink Control Channel (PDCCH) by the mobile station apparatus 200.

The mobile station apparatus 200 continuously decodes the Physical Downlink Control Channel (PDCCH) including the MBMS group ID (MBMS-RNTI) for each downlink sub-frame, and if the mobile station apparatus 200 detects the MBMS group ID (MBMS-RNTI) specified in the above step (Figure 19 - S26) in the Physical Downlink Control Channel (PDCCH) (Yes in Figure 19 - S27), the mobile station apparatus 200 receives the Physical Downlink Shared Channel (PDSCH) designated by the Physical Downlink Control Channel (PDCCH), receives the Multicast Traffic Channel (MTCH) (including the desired MBMS service) included in the Physical Downlink Shared Channel (PDSCH) (Figure 19 - S28), and terminates the process (end).

### <MBMS Service (MBMS Transmission Data) Reception Procedure in SCPTM Cell by Using Fourth Mapping Method>

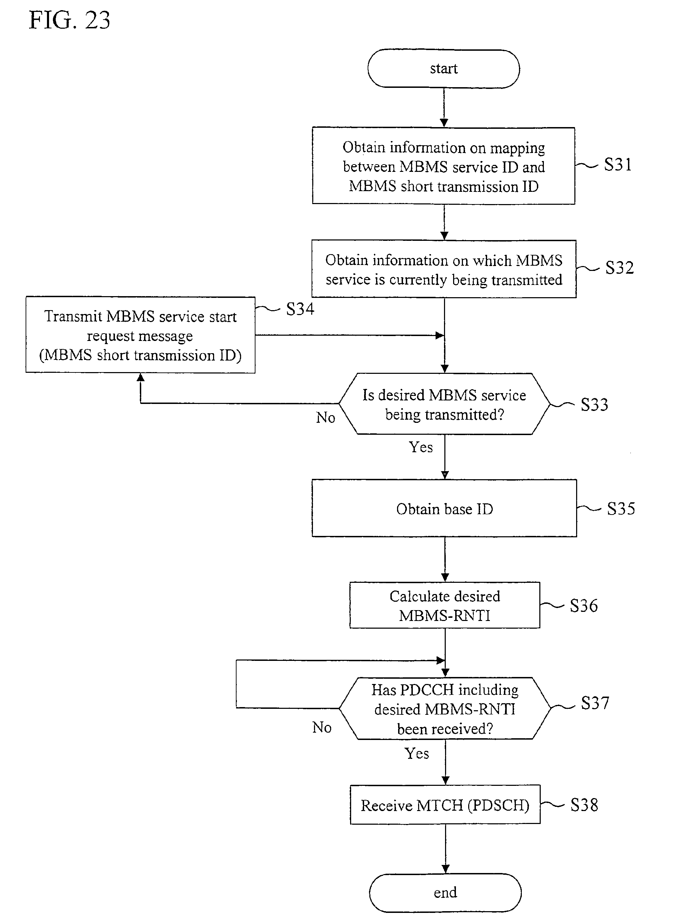

Next, a process procedure in the mobile station apparatus 200 (the radio resource control unit 209 (including the MBMS control unit 210)) when the MBMS service is received in the SCPTM cell by using the fourth mapping method is shown in Figure 23. This process procedure is started if the mobile station apparatus 200 attempts to receive the MBMS service (start).

In the SCPTM cell, when the MBMS transmission data is received, the mobile station apparatus 200 receives the Broadcast Control Channel (BCCH), the Multicast Control Channel (MCCH), and the Multicast Traffic Channel (MTCH), in order thereof.

The mobile station apparatus 200 receives the MBMS-related information included in the Broadcast Control Channel (BCCH) and/or the Multicast Control Channel (MCCH) from the base station apparatus 100, obtains the mapping information between the MBMS service ID and the MBMS short transmission ID as shown in Figure 8 or 7, for all the MBMS services which can be provided in this SCPTM cell (Figure 23 - S31), further obtains the information on which MBMS service is currently being transmitted (Figure 23 - S32), and thereby, comprehends the correspondence relationship between the MBMS service ID and the MBMS short transmission ID, and whether or not the MBMS service desired to be received is being transmitted (Figure 23 - S33).

If the MBMS service desired to be received is currently not being transmitted (No in Figure 23 - S33), the mobile station apparatus 200 transmits the MBMS service start request message including the MBMS short transmission ID to the base station apparatus 100 (Figure 23 - S34). For example, if the mobile station apparatus 200 hopes to receive the MBMS service of the MBMS service ID 1, the mobile station apparatus 200 transmits the MBMS service start request message including the MBMS short transmission ID 1 corresponding to the MBMS service ID 1, to the base station apparatus. In this way, in order to make the MBMS service start request, instead of transmitting the MBMS service ID of a large number of bits (24 to 40 bits), the MBMS short transmission ID of a fewer number of bits (3 bits) is transmitted, and thereby, the consumption of the uplink resource is reduced.

Subsequently, if the MBMS service desired to be received is being transmitted (Yes in Figure 23 - S33), the mobile station apparatus 200 obtains the base ID as shown in Figure 22 from the MBMS-related information (Figure 23 - S35). Then, the mobile station apparatus 200 calculates the MBMS group ID (MBMS-RNTI) by the addition of the base ID and the flexible ID (Figure 23 - S36).

Here, as described above, the flexible ID used in the third mapping method is managed as the fixed value for the MBMS short transmission ID. For example, the flexible ID is set to the value common to the MBMS short transmission ID and is managed. At this time, the fixed value corresponding to the MBMS short transmission ID 1 is 1.

In other words, the MBMS group ID (MBMS-RNTI) corresponding to the MBMS short transmission ID 1 is calculated as FEDC (in hexadecimal notation), the MBMS group ID (MBMS-RNTI) corresponding to the MBMS short transmission ID 2 is calculated as FEDD (in hexadecimal notation), the MBMS group ID (MBMS-RNTI) corresponding to the MBMS short transmission ID 3 is calculated as FEDE (in hexadecimal notation), the MBMS group ID (MBMS-RNTI) corresponding to the MBMS short transmission ID 4 is calculated as FEDF (in hexadecimal notation), the MBMS group ID (MBMS-RNTI) corresponding to the MBMS short transmission ID 5 is calculated as FEE0 (in hexadecimal notation), the MBMS group ID (MBMS-RNTI) corresponding to the MBMS short transmission ID 6 is calculated as FEE1 (in hexadecimal notation), the MBMS group ID (MBMS-RNTI) corresponding to the MBMS short transmission ID 7 is calculated as FEE2 (in hexadecimal notation), and the MBMS group ID (MBMS-RNTI) corresponding to the MBMS short transmission ID 8 is calculated as FEE3 (in hexadecimal notation). Thereby, the correspondence relationship between the MBMS service ID desired to be received and the MBMS group ID (MBMS-RNTI) is comprehended by the mobile station apparatus 200.

Then, the mobile station apparatus 200 decodes the Physical Downlink Control Channel (PDCCH) for each downlink sub-frame, confirms whether or not the MBMS group ID (MBMS-RNTI) specified in the above step (Figure 23 - S36) is included in the Physical Downlink Control Channel (PDCCH), and thereby, confirms whether or not there is the MBMS service desired to be received (Figure 23 - S37). For example, if the mobile station apparatus 200 hopes to receive the MBMS service ID 101, since the corresponding MBMS group ID (MBMS-RNTI) is FFF3 (in hexadecimal notation), it is confirmed whether or not FFF3 is included in the Physical Downlink Control Channel (PDCCH) by the mobile station apparatus 200.

The mobile station apparatus 200 continuously decodes the Physical Downlink Control Channel (PDCCH) including the MBMS group ID (MBMS-RNTI) for each downlink sub-frame, and if the mobile station apparatus 200 detects the MBMS group ID (MBMS-RNTI) specified in the above step (Figure 23 - S36) in the Physical Downlink Control Channel (PDCCH) (Yes in Figure 23 - S37), the mobile station apparatus 200 receives the Physical Downlink Shared Channel (PDSCH) designated by the Physical Downlink Control Channel (PDCCH), receives the Multicast Traffic Channel (MTCH) (including the desired MBMS service) included in the Physical Downlink Shared Channel (PDSCH) (Figure 23 - S38), and terminates the process (end).

### <Summary>

As described above, according to a communication technique according to a form of the present invention, the base station apparatus included in the SCPTM cell can realize the efficient use of the identification information group (MAC ID) region which is assigned to the mobile station apparatus by the base station apparatus, and the reduction in the uplink resource for making the request from the mobile station apparatus to the base station apparatus to start the transmission of the MBMS service, by defining the mapping method between the MBMS short transmission ID and the MBMS group ID (MBMS-RNTI).

### <Further Variation>

It should be noted that the present invention is not limited to the examples shown in the above described embodiment, and various changes can be made. In other words, in the present embodiment, a case where the MBMS service is provided to the mobile station apparatus which originally exists within the SCPTM cell has been described by way of example. However, the present invention is also applicable to a case where the mobile station apparatus moves from an MBSFN Area to the SCPTM cell.

Moreover, in the description in the present embodiment, the mapping information between the MBMS short transmission ID and the MBMS service ID, and the mapping information between the MBMS short transmission ID and the MBMS group ID (MBMS-RNTI) are included in the MBMS-related information and transmitted. However, any configuration may be employed in which the mobile station apparatus can judge the correspondence relationships between them. For example, the MBMS-related information may be configured for each MBMS short transmission ID so that the MBMS service ID and/or the MBMS group ID (MBMS-RNTI) corresponding to the MBMS short transmission ID may be included in each MBMS-related information. Moreover, for example, the MBMS-related information may be configured for each MBMS group ID (MBMS-RNTI) so that the MBMS service ID and/or the MBMS short transmission ID corresponding to the MBMS group ID (MBMS-RNTI) may be included in each MBMS-related information. In this case, the MBMS service ID and/or the MBMS short transmission ID corresponding to the MBMS group ID (MBMS-RNTI) may be included in the Physical Downlink Shared Channel (PDSCH) designated by the Physical Downlink Control Channel (PDCCH) including the MBMS group ID (MBMS-RNTI).

Moreover, in the above described embodiment, configurations and the like shown in the accompanying drawings are not limited thereto, and can be changed as appropriate within a range for exhibiting the effects of the present invention. In addition, the present invention can be changed and practiced as appropriate, as long as the change does not deviate from the scope of the object of the present invention.

Moreover, processes in the respective units may be performed by recording a program for realizing functions described in the present embodiment, in a computer-readable recording medium, causing a computer system to read the program recorded in this recording medium, and executing the program. It should be noted that "computer system" as herein referred to is assumed to include an OS and hardware such as peripheral devices.

Moreover, "computer system" is assumed to also include a homepage provision environment (or display environment) if a WWW system is used.

Moreover, "computer-readable recording medium" refers to a portable medium such as a flexible disk, a magnetic optical disk, a ROM or a CD-ROM, or a storage device such as a hard disk included in the computer system. Furthermore, "computer-readable recording medium" is assumed to also include a medium which dynamically retains the program for a short time, such as communication wires in a case where the program is transmitted via a network such as the Internet or communication lines such as telephone lines, and a medium which retains the program for a certain period of time, such as a volatile memory within the computer system which becomes a server or a client in that case. Moreover, the above described program may be for realizing a part of the above described functions, and furthermore, may be able to realize the above described functions in combination with a program which has already been recorded in the computer system. Moreover, the above described program may be a communication method.

Moreover, in the above description, for convenience, a case where the base station apparatus and the mobile station apparatus perform processes in a one-to-one manner has been described. However, of course, a plurality of the base station apparatuses may exist, or a plurality of the mobile station apparatuses may exist.

Moreover, kinds of radio access means are not limited to existing means such as W-CDMA, cdma2000, wireless LAN and PHS, and the present invention is also applicable to communication means which is practically used in the future.

### Industrial Applicability

The present invention can be used in a mobile communication system which provides the MBMS service.

## Claims

1. In a mobile communication system which provides a Multimedia Broadcast Multicast Service (MBMS), a mobile station apparatus which communicates with a base station apparatus, comprising:
a first control unit which maps an MBMS short transmission ID for identifying the MBMS service transmitted within a cell, to an MBMS group ID (MBMS-RNTI) for identifying a group of mobile stations to which multicast is performed.

2. The mobile station apparatus according to claim 1, wherein the MBMS short transmission ID is mapped to the MBMS service provided in the mobile communication system.

3. The mobile station apparatus according to claim 1, wherein mapping between the MBMS group ID (MBMS-RNTI) and the MBMS short transmission ID is specified based on predefined information.

4. The mobile station apparatus according to claim 1, wherein mapping between the MBMS group ID (MBMS-RNTI) and the MBMS short transmission ID is specified based on information notified by the base station apparatus.

5. The mobile station apparatus according to claim 4, wherein the mapping between the MBMS group ID (MBMS-RNTI) and the MBMS short transmission ID is specified based on an arrangement position of the MBMS group ID (MBMS-RNTI), in information indicating mapping between the MBMS short transmission ID and the MBMS group ID (MBMS-RNTI), which is notified by the base station apparatus.

6. The mobile station apparatus according to claim 4, wherein a base ID and a flexible ID are included in information indicating mapping between the MBMS short transmission ID and the MBMS group ID (MBMS-RNTI), which is notified by the base station apparatus, and the mapping between the MBMS group ID (MBMS-RNTI) and the MBMS short transmission ID is specified based on the base ID and the flexible ID.

7. The mobile station apparatus according to claim 4, wherein a base ID is included in information indicating mapping between the MBMS short transmission ID and the MBMS group ID (MBMS-RNTI), which is notified by the base station apparatus, and the mapping between the MBMS group ID (MBMS-RNTI) and the MBMS short transmission ID is specified based on the base ID.

8. The mobile station apparatus according to claim 1, wherein the MBMS group ID (MBMS-RNTI) is assigned from a Cell - Radio Network Temporary Identity (C-RNTI) which is used for designating the mobile station apparatus when unicast data is transmitted and received, in an identification information group (MAC ID).

9. The mobile station apparatus according to claim 1, wherein the mobile station apparatus transmits an MBMS service start request message including the MBMS short transmission ID, to the base station apparatus, in order to request transmission of the MBMS service desired to be received.

10. The mobile station apparatus according to claim 1, wherein, in order to perform scheduling of the MBMS service, the MBMS group ID (MBMS-RNTI) is included in a Physical Downlink Control Channel (PDCCH).

11. A base station apparatus which provides an MBMS service to a mobile station apparatus, comprising:
a second control unit which, if an MBMS service start request message including an MBMS short transmission ID is received from the mobile station apparatus, calculates an MBMS group ID (MBMS-RNTI) corresponding to the MBMS short transmission ID, and starts transmission of the MBMS service.

12. A mobile communication system which comprises a base station apparatus and a mobile station apparatus, and provides a Multimedia Broadcast Multicast Service (MBMS), wherein
the mobile station apparatus comprises a first control unit which performs mapping between an MBMS service ID for identifying the MBMS service provided in the mobile communication system, and an MBMS short transmission ID for identifying the MBMS service transmitted within an SCPTM cell, and further maps the MBMS short transmission ID to an MBMS group ID (MBMS-RNTI) for identifying a group of mobile stations to which multicast is performed, and
the base station apparatus comprises a second control unit which, if the MBMS service start request message including the MBMS short transmission ID is received from the mobile station apparatus, calculates the MBMS group ID (MBMS-RNTI) corresponding to the MBMS short transmission ID, and starts transmission of the MBMS service.

13. In a mobile communication system which provides a Multimedia Broadcast Multicast Service (MBMS), a communication method in a mobile station apparatus which communicates with a base station apparatus, comprising the steps of:
performing mapping between an MBMS service ID for identifying the MBMS service provided in the mobile communication system, and an MBMS short transmission ID for identifying the MBMS service transmitted within a cell; and
further mapping the MBMS short transmission ID to an MBMS group ID (MBMS-RNTI) for identifying a group of mobile stations to which multicast is performed.

14. A program for causing a computer to execute a method according to claim 13.
